# EUROPÄISCHE PATENTSCHRIFT

(11) **EP 1 230 808 B1**
(45) Veröffentlichungstag und Bekanntmachung des Hinweises auf die Patenterteilung: **03.09.2008**
(21) Anmeldenummer: 00987153.4
(22) Anmeldetag: 16.11.2000
(51) Int. Cl.: H04Q 3/00, H04M 3/46, H04M 3/523

(54) **REALISIERUNG VON ZUSÄTZLICHEN FUNKTIONEN FÜR LEISTUNGSMERKMALE AUFWEISENDE TEILNEHMERANSCHLÜSSE**
IMPLEMENTATION OF ADDITIONAL FUNCTIONS FOR USER CONNECTIONS HAVING INDIVIDUALLY CONFIGURED PERFORMANCE CRITERIA
REALISATION DE FONCTIONS SUPPLEMENTAIRES POUR DES RACCORDEMENTS D'ABONNES INDIQUANT LES CARACTERISTIQUES DE PUISSANCE

(30) Priorität: 19.11.1999 DE 19955761; 23.05.2000 DE 10025438
(43) Veröffentlichungstag der Anmeldung: 14.08.2002
(73) Patentinhaber: Nokia Siemens Networks GmbH & Co. KG, 81541 München (DE)
(72) Erfinder: LANTERMANN, Jürgen, 81477 München (DE); BAUMERT, Norbert, 86949 Windach (DE)
(86) Internationale Anmeldenummer: PCT/DE2000/004061
(87) Internationale Veröffentlichungsnummer: WO 2001/039518

(56) Entgegenhaltungen:
- WO-A-98/25392
- US-A- 5 247 571
- US-A- 5 329 523
- US-A- 5 459 780
- LAUTENSCHLAGER W ET AL: "ROUTING SERVICE FOR THE PROVISION OF NUMBER PORTABILITY" PROCEEDINGS OF ISS'97, Bd. 2, 21. - 26. September 1997, Seiten 235-242, XP000704473

## Beschreibung

In aktuellen Kommunikationsnetzen, insbesondere in als Fernsprechnetz ausgestalteten Kommunikationsnetzen ist neben dem Anschluß von privaten Nebenstellenanlagen an öffentliche Vermittlungseinrichtungen der Zusammenschluß mehrerer Teilnehmerleitungen zu einer die Funktion einer Nebenstellenanlage nachbildenden "Multi Line Hunting Group" - im Folgenden auch als "MLHG" bezeichnet - bekannt. Einer MLHG ist eine von allen zusammengeschlossenen Teilnehmerleitungen gemeinsam genutzte Gruppen-Rufnummer bzw. Pilot-Rufnummer - auch als "Pilot Directory Number" bzw. "Pilot DN" bezeichnet - zugeordnet, nach deren Wahl - z.B. für den Aufbau einer Kommunikationsbeziehung zu einer der der MLHG zugeordneten Kommunikationsendeinrichtungen - innerhalb der Gruppe eine freie Teilnehmerleitung mit Hilfe eines definierten Suchverfahrens - im Folgendem als "Hunting-Algorithmus" bezeichnet - für den Verbindungsaufbau ermittelt wird.

Bei einer MLHG können die selben Suchverfahren bzw. Hunting-Algorithmen wie bei klassischen Nebenstellanlagen eingesetzt werden, z.B.
- "Sequential Hunting" (Auswahl der ersten freien Teilnehmerleitung, immer von einem definierten Startpunkt beginnend),
- "Circular Hunting/Uniform Call Distribution (Weitersuche nach der zuletzt ermittelten, freien Teilnehmerleitung),
- "Non-sequential Hunting" (Auswahl der Teilnehmerleitung, die am längsten frei war),
- "Stochastical Hunting" (Auswahl einer freien Teilnehmerleitung nach dem Zufallsprinzip).

Die MLHG ist insbesondere für kleine und mittelständische Unternehmen interessant, welche eine Anrufverteilung in Verbindung mit einer Pilot-Rufnummer im Sinne einer Nebenstellenanlage benötigen, jedoch nicht in private Vermittlungseinrichtungen bzw. Nebenstellenanlagen investieren wollen.

Eine MLHG weist jedoch den Nachteil auf, daß die zu einer MLHG zusammengefaßten Teilnehmerleitungen physikalisch derselben Vermittlungseinrichtung zugeordnet sein müssen, was eine lokale Beschränkung der MLHG bzw. der durch die MLHG bereitgestellten, gruppenspezifischen Leistungsmerkmale bedeutet.

Im Rahmen der ITU-Spezifikation ITU-T Q.82.4 ist eine Erweiterung der Bereitstellung von gruppenspezifischen Leistungsmerkmalen erwähnt - z.B. Erweiterung von Such-Algorithmen bzw. Hunting-Algorithmen auf mehrere Vermittlungseinrichtungen bzw. Netzknoten -, bisher ist jedoch keine Lösung offenbart.

Innerhalb von aktuellen Fernsprechnetzen erfolgt die Signalisierung für den Auf- und Abbau von 64 kBit-Nutzkanalverbindungen zur Steuerung von ISDN-Diensten auf der Basis des ITU-T-Zeichengabesystems Nr. 7 - auch als SS NR.7 bezeichnet.

Die eigentliche Aufgabe des Zeichengabeverfahrens Nr. 7 ist der Austausch von Signalisierungsnachrichten innerhalb der Kommunikationsnetze. Die Signalisierungsnachrichten werden durch die Anwenderteile - auch als User Parts bezeichnet - innerhalb des Referenzmodells ausgetauscht. Man unterscheidet je nach Art der Signalisierungsnachrichten beispielsweise zwischen dem Telefon User Part - TUP -, dem Data User Part - DUP -, dem ISDN-Userpart - ISUP - und dem Broadband-ISDN-Userpart - B-ISUP. Der TUP wurde als erste Anmeldung im Signalisierungsverfahren Nr. 7 implementiert. Auf den TUP aufbauend zur allgemeinen Festlegung des ISDN und zur Festlegung der Zeichengabe innerhalb des ISDN wurde der ISUP definiert. Aus dem ISUP entstand als aktuellste Anwendung der B-ISUP für Anwendungen innerhalb von ATM-basierten Netzen. Die Hauptaufgaben des ISUP sind:
- Auf- und Abbau von Nutzkanalverbindungen,
- Abwickeln der Zeichengabe für Dienstmerkmale,
- Koppelung von zwei "logischen" Zeichengabeverbindungen (z.B. beim Übergang vom nationalen in das internationale Netz).

Der ISDN-Anwenderteil bedient sich direkt des Nachrichtentransferteils - MTP - und des Steuerteils für Signalisierungsverbindungen - SCCP, Schicht 4 -, der ISUP selbst ist also der Schicht 4 bis 7 im OSI-Referenzmodell einzuordnen. Der ISDN-Anwenderteil steuert sowohl die abschnittsweise Signalisierung zur Zielerreichung, als auch die End-to-End-Zeichengabebeziehung zwischen der Ursprungs-und Zielvermittlungsstelle. Mit Hilfe der abschnittsweisen Signalisierung wird der Weg für die Nutzkanalverbindung und die Zeichengabeverbindung gesucht, und, nach entsprechenden Befehlen, aufgebaut. Hierzu wird der MTP verwendet. Für die Nutzkanalverbindung müssen alle beteiligten Vermittlungsstellen über z.B. die Durchschaltung des Nutzkanals informiert werden, während für die Steuerung der Dienstmerkmale nur die Ursprungs- und die Zeilvermittlungsstelle Signalisierungsinformationen austauschen. Für die End-to-End-Zeichengabe bedient sich der ISUP der Leistungen des SCCP. Im ISDN-Anwenderteil werden die eigentlichen Signalisierungsinformationen ausgetauscht. Alle unterliegenden Schichten sorgen dafür, daß diese Informationen gesichert übertragen werden und den adressierten Anwenderteil erreichen. Für den Austausch der End-to-End-Signalisierungsnachrichten zur Behandlung von ISDN-Dienstmerkmalen wird die End-to-End-Signalisierung des SCCP basierend auf einem TCAP-Dialog verwendet.

Für komplexere Anwendungen innerhalb von Kommunikationsnetzen wie beispielsweise zur Unterstützung von Datenbankabfragen bei Diensten des Intelligenten Netzes - auch als IN bezeichnet - bzw. bei Mobilfunkanwendungen wurde der Transaction Capabilities Application Part - TCAP - in das Zeichengabeverfahren Nr. 7 eingeführt. Beispielsweise wird mit dem Freephone-Dienst des Intelligenten Netzes vom Initiator der Verbindung eine IN-Rufnummer gewählt (0130 bzw. 0800), die durch einen Aufruf zum Intelligenten Netz in Abhängigkeit von den Kundenparametern eine Zielrufnummer ermittelt. Für die Ermittlung der gültigen Zielrufnummer müssen nur Signalisierungsnachrichten ausgetauscht werden, der Nutzkanal wird nicht zum IN geschaltet. Dieser Dienstaufruf ist beispielsweise eine typische TCAP-Anwendung. Bei der Kommunikation von TCAP-Instanzen wird zwischen dem strukturierten und dem unstrukturierten Dialog unterschieden. Beim strukturierten Transport wird vor dem Nachrichtenaustausch eine Transaktionsbeziehung eröffnet und die Transaktionskennung - auch als Transaction-ID bezeichnet - in beiden Kommunikationseinrichtungen der beiden beteiligten Zeichengabeknoten zur Identifikation dieser Beziehung vergeben. Nach einer BEGIN-Nachricht werden im strukturierten Dialog die einzelnen Informationen mit CONTINUE-Nachrichten übertragen. Die BEGIN-Nachricht enthält die Transaktionskennung des Initiators, die CONTINUE-Nachrichten enthalten je nach der Übertragungsrichtung die Kennung des Initiators oder die des Kommunikationspartners als Ursprungskennung und die Kennung des Kommunikationspartners als Zielkennung. Nach der Informationsübertragung wird der Dialog durch die END-Nachricht regulär beendet. Der strukturierte Dialog wird beispielsweise für Datenbankabfragen wie beispielsweise in Mobilfunknetzen oder im IN verwendet, alle ausgetauschten Nachrichten können durch die Transaktionskennung als zu dieser Aktivität gehörig gekennzeichnet werden.

Ein intelligentes Netz bzw. IN ist ein mit einer Architektur vergleichbares Konzept zur Einbringungen von komplexen Diensten in vorhandene Telekommunikationsnetze, wobei die Architektur die Struktur einer konkreten IN-Realisierung beschreibt. Die Architektur ist so konzipiert, dass diese als einheitliche Basis für eine Vielzahl unterschiedlicher Dienste geeignet ist. Die Architektur intelligenter Netze stellt als Ergänzung zu den herkömmlichen Telekommunikationsnetzen eine Plattform dar, auf der die eigentlichen Dienste aufsetzen. In der Standardisierung wurden drei (physikalische) Ebenen festgelegt, denen die verschiedenen Komponenten und Funktionen des konzeptionellen Modells eines Intelligenten Netzes zugeordnet sind.

Die durch die Architektur der IN realisierte Plattform umfaßt nicht nur Hardware-Komponenten, sondern auch eine Software-Plattform, auf der sehr spezifische Dienste mittels geeigneten Hilfsmitteln von den IN-Betreibern entwickelt und in die Hardware-Komponenten geladen werden können. Die Hardware intelligenter Netze besteht hauptsächlich aus Vermittlungsstellen des Fernsprechnetzes - auch als SSP bzw. "Service-Switching-Point" bezeichnet-, die den eigentlichen Aufruf eines IN-Dienstes erkennen und zu einem entsprechenden SCP - auch als "Service-Control-Point" bezeichnet - leiten. Der eigentliche Dienst läuft auf einem SCP, einem sehr leistungsfähigen Rechner mit einer großen, komplexen Datenbank, durch welche viele Anfragen in kurzer Zeit bearbeiten werden. Für den Betrieb der Dienste ist eine weitere Ebene erforderlich, welche auch als SMP bzw. "Service-Management-Point" bezeichnet wird. Über die SMP's können sich Dienstkunden zum Intelligenten Netz einwählen und ihre jeweiligen Einstelldaten bzw. Parameter für den jeweiligen Dienst verändern bzw. anpassen.

Ein Dienstvermittlungsfunktionen realisierender Service-Switching-Point erkennt IN-Rufe und leitet die Anfragen an den entsprechenden SCP weiter. Der SSP ist eine digitale Vermittlungsstelle mit speziellen Steuerungsprogrammen (z.B. alle Fernvermittlungsstellen einer bestimmten Ebene). Der Aufruf einer IN-Funktion ist in der Steuerung der Vermittlungsstelle mittels vordefinierter Trigger gekoppelt. Hierbei können nicht nur bestimmte Rufnummern einen sogenannten Trigger-Punkt - auch als Trigger-Detektion-Point bezeichnet - darstellen, es können auch bestimmte Zustände der Verbindung - z.B. Treffen auf einen besetzten Teilnehmer, Teilnehmer meldet sich nicht u.a. - mit IN-Trigger-Punkten gekoppelt sein. Im einfachsten Fall kann nur das Abheben eines Telefons bereits ohne weitere Wahl einen IN-Trigger auslösen. Weitere Aktionen --z.B. die Wahl der Rufnummer - können schon von IN bewertet werden. Die Kommunikation mehrerer SSP mit einem SCP erfolgt über Nr. 7-Nachrichten, beispielsweise über TCAP- oder INAP-Dialog.

In einem SCP bzw. Service-Controll-Point sind Funktionen zur Erkennung und Steuerung von IN-Diensten realisiert. Ein SCP wird durch ein oder mehrere Rechnersysteme gebildet, durch welche die IN-Dienste erkannt und entsprechend gesteuert werden. Ein SCP leitet z.B. die Verkehrslenkungsinformationen an den entsprechenden SSP weiter und ermittelt die anfallenden Gebühren für die Nutzung der entsprechenden ISDN-Dienste.

Durch den die Dienstverwaltungsfunktionen realisierenden Service-Management-Point bzw. SMP werden die IN-Dienste des SCP eingerichtet, verändert, verwaltet und überwacht, wobei alle die Parameter - z.B. Rufnummern, Zeitabhängigkeit usw. - über den SMP eingestellt und verändert werden können.

Durch die beschriebenen IN-Elemente - SSP, SCP, SMP - wird im wesentlichen die Steuerung von Verbindungen innerhalb eines Kommunikationsnetzes beeinflußt. Mit Hilfe des Signalisierungsverfahrens Nr. 7 wird die Signalisierung der innerhalb des Kommunikationsnetzes zu vermittelnden Verbindungen zum SCP umgeleitet, jedoch nicht die Nutzkanäle.

Aufgrund der durch das IN realisierten Steuerfunktionen werden die Nutzkanäle innerhalb des Telekommunikationsnetzes geschaltet. Für bestimmte Dienste ist aber auch die Einbeziehung der Nutzkanäle erforderlich. Müssen beispielsweise Teilnehmerabfragen vorgenommen werden, müssen bestimmte, vom IN-System gesteuerte Ansagen angeschaltet und ggf. Antworten auf eine vorgegebene mögliche Auswahl oder eine Identifikation des Teilnehmers aufgenommen werden. Die Antworten des Benutzers werden häufig in Form von DTMF-Signalen gegeben, die ebenfalls im Nutzkanal gesendet werden. Für diese besonderen Aufgaben sind spezielle Einrichtungen innerhalb der IN-Architektur vorgesehen, die auf der einen Seite die Nutzkanäle und auf der anderen Seite Signalisierungsverbindungen zu IN aufweisen. Derartige spezielle Einrichtungen werden als Intelligent Peripherals bzw. IP's bezeichnet. Diese müssen nicht auf das Abspielen von vorgegebenen Ansagen oder die Aufnahme von DTMF-Signalen beschränkt sein. Zukünftig können derartige Systeme auch auf Spracherkennungssysteme oder datenorientierte Systeme erweitert werden. Die Zusammenfassung verschiedener IN-Funktionen, insbesondere die Funktionen von SCP und SSP wird auch als Service-Node bzw. SN bezeichnet.

In US 5 247 571 ist beispielsweise ein "Area Wide Centrex Service" beschrieben, bei dem mehrere jeweils unterschiedlichen lokalen Vermittlungseinrichtungen physikalisch zugeordnete Teilnehmeranschlüsse zu einer Gruppe zusammengefaßt sind, wobei der Gruppe gruppenindividuelle Leistungsmerkmale und/oder gruppenindividuelle Eigenschaften zuordenbar sind. Die Intelligenz zur Steuerung der Funktionen des Centrex Service ist jedoch auf die jeweiligen Vermittlungseinrichtungen lokal verteilt.

In US 5 459 780 ist ein ACD-Kommunikationssystem offenbart (Automatic Call Distribution) bei dem mehrere virtuelle Teilnehmeranschlüsse einer zentralen Vermittlungseinrichtung zugeordnet sind. Durch die zentrale Vermittlungseinrichtung werden die gruppenindividuellen Leistungsmerkmale und/oder Eigenschaften der virtuellen Teilnehmeranschlüsse gesteuert. Die die Gruppe zentral steuernde ACD-Vermittlungseinrichtung wird über die jeweiligen aktuellen, vermittlungstechnischen und/oder betriebstechnischen Zustände der virtuell zugeordneten Teilnehmeranschlüsse bzw. über die Zustände der daran angeschlossenen Agenten über ein zusätzliches, d.h. separates Datennetzwerk informiert.

In WO 98 25392 ist ein Kommunikationsnetz mit einer darin angeordneten, eine Gruppe virtueller Teilnehmeranschlüsse steuernden, zentralen Vermittlungseinrichtung (Network Call Center) beschrieben, bei dem die zentrale Vermittlungseinrichtung nur bei einem durch einen virtuellen Teilnehmeranschluß initiierten Einlog- bzw. Auslogvorgang vom Zustand des jeweiligen virtuellen Teilnehmeranschlusses bzw. Agenten informiert wird. Dagegen werden aktuelle Zustände bzw. Zustandsänderungen während des Zeitraums der "Agententätigkeit" des Agenten nicht durch die zentrale Vermittlungseinrichtung erfaßt, bzw. entsprechend abgeleitete Zustandinformationen in der zentralen Vermittlungseinrichtung gespeichert.

Der Erfindung liegt die Aufgabe zugrunde, die Bereitstellung von die Funktion einer Nebenstellenanlage realisierenden Leistungsmerkmalen zu verbessern. Die Aufgabe wird ausgehend von einem Verfahren und einer Kommunikationsanordnung gemäß dem Oberbegriff der Patentansprüche 1, 3, 23 und 24 durch deren kennzeichnende Merkmale gelöst.

Beim erfindungsgemäßen Verfahren sind jeweils konfigurierte Teilnehmerleistungsmerkmale aufweisende Teilnehmeranschlüsse mehreren untereinander verbundenen Vermittlungseinrichtungen physikalisch zugeordnet. Der wesentliche Aspekt des erfindungsgemäßen Verfahrens besteht darin, daß zumindest ein Teil der Teilnehmeranschlüsse von zumindest zwei Vermittlungseinrichtungen zumindest einer Gruppe zugeordnet wird. Der zumindest einen Gruppe sind gruppenindividuelle Leistungsmerkmale und/oder gruppenindividuelle Eigenschaften zuordenbar, wobei die der Gruppe zugeordneten Leistungsmerkmale und/oder Eigenschaften von einer der Vermittlungseinrichtungen gesteuert werden. In der die Gruppe steuernden Vermittlungseinrichtung werden die nicht dieser Vermittlungseinrichtung physikalisch zugeordneten Teilnehmeranschlüsse der Gruppe als virtuelle Teilnehmeranschlüsse zugeordnet.

Der wesentliche Vorteil des erfindungsgemäßen Verfahrens besteht darin, daß bereits in mehreren Vermittlungseinrichtungen installierte, individuell konfigurierte Teilnehmeranschlüsse auf einfache und wirtschaftliche Weise um zusätzliche Funktionen erweiterbar sind, wobei die bereits realisierten Teilnehmerleistungsmerkmale weiterhin verfügbar sind. Im Rahmen des erfindungsgemäßen Verfahrens können auf kostengünstige Weise - beispielsweise durch eine Aktualisierung der Steuer-Software der Vermittlungseinrichtungen ohne die Anschaffung zusätzlicher Hardware-Komponenten - neue attraktive Leistungsmerkmale und Eigenschaften für die angeschlossenen Teilnehmer bzw. Kommunikationsendeinrichtungen bereitgestellt werden. Insbesondere im Umfeld kleinerer und mittel-ständischer Unternehmen, deren Büros und Geschäfte räumlich verteilt sind, können bereits existierende Teilnehmeranschlüsse unter Beibehaltung der bereits konfigurierten Teilnehmeranschluß-individuellen Leistungsmerkmale um zusätzliche, beispielsweise Nebenstellenanlagen-konforme Leistungsmerkmale erweitert werden, so daß eine Anschaffung einer privaten Nebenstellenanlage nicht mehr erforderlich ist. Durch die kostengünstige Bereitstellung neuer, attraktiver Leistungsmerkmale wird für die Betreiber von Kommunikationsnetzen, insbesondere von Fernsprechnetzen, ein Mehrwert erzielt, was beispielsweise eine Umsatzsteigerung nach sich zieht und zusätzlich eine Möglichkeit zur Abgrenzung gegen Mitbewerber bietet.

Gemäß einer ersten Realisierungsvariante des erfindungsgemäßen Verfahrens sind die Vermittlungseinrichtungen derart administriert, daß Kommunikationsbeziehungen von und zu den Teilnehmeranschlüssen, die physikalisch nicht der die Gruppe steuernden Vermittlungseinrichtungen zugeordnet sind, im vermittlungstechnischen Sinne über die die Gruppe steuernde Vermittlungseinrichtung vermittelt werden. In der die Gruppe steuernden Vermittlungseinrichtung wird der jeweilige aktuelle vermittlungstechnische und betriebstechnische Zustand der physikalisch dieser zugeordneten Teilnehmeranschlüsse und der virtuellen Teilnehmeranschlüsse erfaßt, wobei die den Teilnehmeranschlüssen zugeordneten, gruppenindividuellen Leistungsmerkmale und/oder Eigenschaften in Abhängigkeit von den jeweils erfaßten, betriebstechnischen und vermittlungstechnischen Zuständen gesteuert werden - Anspruch 2.

Bei dieser Ausgestaltungsvariante zur Realisierung des erfindungsgemäßen Verfahrens werden alle aufzubauenden Kommunikationsbeziehungen von und zu den der Gruppe zugeordneten Teilnehmeranschlüssen bzw. von und zu den daran angeschlossenen Kommunikationsendeinrichtungen über die die Gruppe steuernde Vermittlungseinrichtung bzw. über eine Kontroll-Vermittlungseinrichtung geführt. Dies wird auch als "Ruf-Kanalisierung" bezeichnet. Durch die "Ruf-Kanalisierung" kann der jeweilige aktuelle vermittlungstechnische und betriebstechnische Zustand der einzelnen Teilnehmeranschlüsse bzw. Kommunikationsendeinrichtungen durch die die Gruppe steuernde Vermittlungseinrichtung erfaßt werden - auch als "Busy/Idle-Handling" bezeichnet. Die so erfaßten vermittlungstechnischen Informationen werden in entsprechenden Datensätzen in der die Gruppe steuernden Vermittlungseinrichtung gespeichert.

Gemäß einer alternativen Ausgestaltungsvariante zur Realisierung des erfindungsgemäßen Verfahrens sind die Vermittlungseinrichtungen derart administriert, daß die aktuellen vermittlungstechnischen und betriebstechnischen Zustände der physikalisch nicht der die Gruppe steuernden Vermittlungseinrichtung zugeordneten Teilnehmeranschlüsse an die die Gruppe steuernde Vermittlungseinrichtung übermittelt werden oder jede Änderung des vermittlungstechnischen und betriebstechnischen Zustands der physikalisch nicht der die Gruppe steuernden Vermittlungseinrichtung zugeordneten Teilnehmeranschlüsse an die die Gruppe steuernden Vermittlungseinrichtung übermittelt wird. In der die Gruppe steuernden Vermittlungseinrichtung wird der jeweilige aktuelle vermittlungstechnische und betriebstechnische Zustand der physikalisch dieser zugeordneten Teilnehmeranschlüsse und der virtuellen Teilnehmeranschlüsse erfaßt. In Abhängigkeit von den jeweils erfaßten betriebstechnischen und vermittlungstechnischen Zuständen werden die den Teilnehmeranschlüssen zugeordneten, gruppenindividuellen Leistungsmerkmale und/oder Eigenschaften gesteuert - Anspruch 4.

Bei dieser vorteilhaften Realisierungsvariante des erfindungsgemäßen Verfahrens wird der konzeptbedingte Nachteil der in Anspruch 2 beanspruchten "Ruf-Kanalisierung", bei der alle ankommenden und abgehenden Rufe von und zu den physikalisch nicht der die Gruppe steuerenden Vermittlungseinrichtung zugeordneten Teilnehmeranschlüssen stets über die die Gruppe steuernde Vermittlungseinrichtung vermittelt werden müssen - auch als "Tromboning" bezeichnet - vermieden. Durch das Übermitteln der jede Änderung des vermittlungstechnischen und betriebstechnischen Zustands der physikalisch nicht der die Gruppe steuernden Vermittlungseinrichtung zugeordneten Teilnehmeranschlüsse an diese die Gruppe steuernde Vermittlungseinrichtung wird das unnötige Belegen von Netzressourcen bzw. Verbindungskanälen vermieden.

Nach einer vorteilhaften Weiterbildung des erfindungsgemäßen Verfahrens ist der Gruppe zumindest eine gruppenindividuelle Warteschlange zugeordnet. Für den Fall, daß im Rahmen des Such-Verfahrens kein freier Teilnehmeranschluß ermittelt wird, wird die Kommunikationsbeziehung in der zumindest einen Warteschlange eingereiht. Nach Feststellen eines freien Teilnehmeranschlusses wird die Kommunikationsbeziehung aus der Warteschlange herausgelöst und an den freien Teilnehmeranschluß weitervermittelt - Anspruch 10. Durch diese vorteilhafte Weiterbildung wird das Zurückweisen einer Kommunikationsverbindung für den Besetztfall verhindert.

Vorteilhaft wird durch einen Teilnehmeranschluß zumindest ein im Rahmen des Such-Verfahrens vermittelbarer Nutzdatenkanal für die Informationsübermittlung bereitgestellt - Anspruch 12 - wobei bei einem mehrere Nutzdatenkanäle aufweisenden Teilnehmeranschluß die Anzahl der im Rahmen des Such-Verfahrens für den Teilnehmeranschluß vermittelbaren Nutzdatenkanäle individuell vorgebbar ist - Anspruch 13. Durch diese vorteilhafte Ausgestaltung kann verhindert werden, daß alle durch einen Teilnehmeranschluß bereitgestellten Nutzdatenkanäle im Rahmen des Such-Verfahrens, d.h. unter der zugeordneten Gruppen-Rufnummer belegt werden. Dadurch kann für einen Teilnehmeranschluß zumindest ein Nutzdatenkanal für die direkte Anwahl eines Teilnehmers außerhalb des Gruppen-Suchverfahrens oder für ausgehende Kommunikationsbeziehungen reserviert werden.

Gemäß einer weiteren vorteilhaften Ausgestaltung ist dem Teilnehmeranschluß zumindest eine Teilnehmerrufnummer zugeordnet, wobei im Rahmen des Such-Verfahrens die Anzahl der unter einer Teilnehmerrufnummer gleichzeitig genutzten Nutzdatenkanäle individuell vorgebbar ist - Anspruch 14. Durch diese vorteilhafte Ausgestaltung wird verhindert, daß im Rahmen des Suchverfahrens gleichzeitig mehrere Verbindungen bzw. Kommunikationsbeziehungen unter einer Teilnehmerrufnummer geführt bzw. vermittelt werden. Dadurch wird die Zurückweisung einer eingehenden Kommunikationsbeziehung durch beispielsweise eine bereits den vermittlungstechnischen Zustandes "Besetzt" aufweisende Teilnehmerrufnummer im Rahmen des Such-Verfahrens verhindert.

Weitere vorteilhafte Ausgestaltungen des erfindungsgemäßen Verfahrens sowie eine Kommunikationsanordnung zur Realisierung von zusätzlichen Leistungsmerkmalen sind den weiteren Ansprüchen zu entnehmen.

Im folgenden wird das erfindungsgemäße Verfahren anhand mehrerer Zeichnungen erläutert. Dabei zeigen
- FIG 1: mehrere in einem Kommunikationsnetz angeordnete, untereinander verbundene Vermittlungseinrichtungen mit mehreren physikalisch zugeordneten Teilnehmeranschlüssen, welche im Rahmen des erfindungsgemäßen Verfahrens zumindest einer Gruppe zugeordnet werden, wobei die Gruppe von einer Kontroll-Vermittlungseinrichtung gesteuert wird,
- FIG 2: eine im Rahmen des erfindungsgemäßen Verfahrens realisierte Rufkanalisierung für von Teilnehmeranschlüssen abgehende Kommunikationsbeziehungen über die Kontroll-Vermittlungseinrichtung,
- FIG 3: eine erste Realisierungsvariante der Rufkanalisierung von in Richtung Teilnehmeranschlüsse zu vermittelnden Kommunikationsbeziehungen mittels Modifikation der Teilnehmerrufnummern und mittels administrativer Anpassung des Routings innerhalb des Kommunikationsnetzes,
- FIG 4: eine zweite Realisierungsvariante der Rufkanalisierung von in Richtung externer Teilnehmeranschlüsse zu vermittelnden Kommunikationsbeziehungen mittels Modifikation der Teilnehmerrufnummern und Ausnutzung des vermittlungstechnischen Leistungsmerkmales "Nummernportabilität" bzw. "number portability",
- FIG 5: eine dritte Realisierungsvariante der Rufkanalisierung von in Richtung externer Teilnehmeranschlüsse zu vermittelnden Kommunikationsbeziehungen mittels des vermittlungstechnischen Leistungsmerkmales "automatischer Anrufumlenkung" von den externen Teilnehmeranschlüssen auf die Kontroll-Vermittlungseinrichtung.
- FIG 6: eine alternative Realisierungsvariante des erfindungsgemäßen Verfahrens, bei der anstelle der Rufkanalisierung die aktuellen Belegtzustände der externen Teilnehmeranschlüsse an die KontrollVermittlungseinrichtung übermittelt werden.

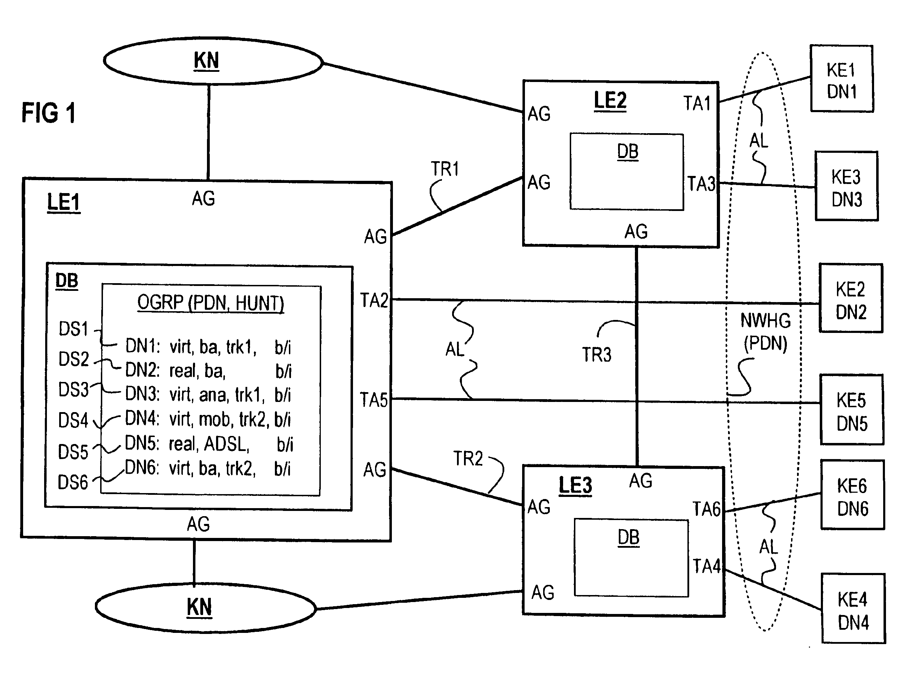

FIG 1 zeigt in einem Blockschaltbild mehrere in einem Kommunikationsnetz angeordneten Vermittlungseinrichtungen LE1...3, welche über Anschlußgruppen AG und Zwischenamtsleitungen TR1...3 miteinander verbunden bzw. vermascht sind. Über weitere Anschlußgruppe AG sind die untereinander vermaschten Vermittlungseinrichtungen LE1...3 mit dem übergeordneten, beispielsweise als Fernsprechnetz ausgestalteten Kommunikationsnetz KN verbunden. Im Kommunikationsnetz KN sind mehrere Kommunikationsendeinrichtungen KE1...6 angeordnet, welche über jeweils eine Anschlußleitung AL und jeweils einen Teilnehmeranschluß TA1...6 an die in FIG 1 dargestellten Vermittlungseinrichtungen LE1...3 angeschlossen sind. In diesem Ausführungsbeispiel ist die erste Kommunikationsendeinrichtung KE1 als ISDN-konformes Kommunikationsendgerät - z.B. ISDN-Telefon oder Personalcomputer mit integrierter ISDN-Karte - ausgestaltet. Die erste Kommunikationsendeinrichtung KE1 ist über den ersten, als ISDN-Basisanschluß ausgestalteten Teilnehmeranschluß TA1 an die zweite Vermittlungseinrichtung LE2 angeschlossen. Der ersten Kommunikationsendeinrichtung KE1 ist eine erste Teilnehmerrufnummer DN1 zugeordnet, durch welche die erste Kommunikationsendeinrichtung KE1 innerhalb des Kommunikationsnetzes KN eindeutig adressiert ist. Die zweite Kommunikationsendeinrichtung KE2 ist ebenfalls als ISDN-konformes Kommunikationsendgerät ausgestaltet und über den als ISDN-Basisanschluß ausgestalteten zweiten Teilnehmeranschluß TA2 an die erste Vermittlungseinrichtung LE1 angeschlossen. Der zweiten Kommunikationsendeinrichtung KE2 ist eine zweite Teilnehmerrufnummer DN2 zugeordnet. Die dritte Kommunikationsendeinrichtung KE3 ist als analoges Fernsprechendgerät ausgestaltet und über die analoge Anschlußleitung AL und über den analog ausgestalteten dritten Teilnehmeranschluß TA3 an die zweite Vermittlungseinrichtung LE2 angeschlossen. Der dritten Kommunikationsendeinrichtung KE3 ist eine dritte Teilnehmerrufnummer DN3 zugeordnet. Die vierte Kommunikationsendeinrichtung KE4 ist als mobiles, drahtloses Kommunikationsendgerät bzw. Handy ausgestaltet und über einen drahtlosen Übertragungskanal und über einen als Mobilfunk-Teilnehmeranschluß ausgestalteten vierten Teilnehmeranschluß TA4 an der dritten Vermittlungseinrichtung LE3 angeschlossen. Der vierten Kommunikationsendeinrichtung KE4 ist eine vierte Teilnehmerrufnummer DN4 zugeordnet. Die fünfte Kommunikationsendeinrichtung KE5 ist als digitale Kommunikationsendeinrichtung - z.B. Personalcomputer - ausgestaltet, welche über eine als ADSL-Leitung - Asymetrical Digital Subscriber Line - ausgestaltete Anschlußleitung AL und über einen fünften Teilnehmeranschluß TA5 an der ersten Vermittlungseinrichtung LE1 angeschlossen ist. Der fünften Kommunikationsendeinrichtung KE5 ist eine fünfte Teilnehmerrufnummer DN5 zugeordnet. Die sechste Kommunikationsendeinrichtung KE6 ist als ISDN-konformes Kommunikationsendgerät ausgestaltet, welche über den als ISDN-Basisanschluß ausgestalteten sechsten Teilnehmeranschluß TA6 an der dritte Vermittlungseinrichtung LE3 angeschlossen ist. Der sechsten Kommunikationsendeinrichtung KE6 ist eine sechste Teilnehmerrufnummer DN6 zugeordnet.

Die drei Vermittlungseinrichtungen LE1...3 weisen jeweils eine Datenbasis DB auf, in welchen jeweils Teilnehmeranschluß-individuelle Informationen gespeichert sind. Teilnehmeranschluß-individuelle Informationen sind beispielsweise die den jeweiligen Teilnehmeranschlüssen TA1...6 zugeordneten Teilnehmerrufnummern DN1...6, die jeweilige Ausgestaltung bzw. Art des Teilnehmeranschlusses - z.B. analoger Anschluß, ISDN-Basisanschluß, ISDN-Primärmultiplexanschluß, ADSL-Anschluß und Mobilfunk-konformer Teilnehmeranschluß - repräsentierende Informationen und die für die jeweiligen Teilnehmeranschlüssen TA1...6 individuell konfigurierten Teilnehmerleistungsmerkmale repräsentierenden Informationen.

Für das weitere Ausführungsbeispiel sei angenommen, daß die an den drei Vermittlungseinrichtungen LE1...3 angeschlossenen Kommunikationsendeinrichtungen KE1...6 zu einer Gruppe NWHG zusammengefaßt werden, wobei für die der Gruppe NWHG zugeordneten Kommunikationsendeinrichtungen KE1...6 gruppenspezifische Leistungsmerkmale bereitgestellt werden sollen. Beispiele für die gruppenspezifischen Leistungsmerkmale sind beispielsweise die durch private Nebenstellenanlagen bereitgestellten Leistungsmerkmale, wie Zuordnen einer gruppenindividuellen Pilot-Rufnummer PDN bzw. "Pilot-DN" sowie ein der Gruppe zugeordnetes Such-Verfahren - auch als Hunting-Algorithmus bezeichnet - zum Ermitteln eines freien Teilnehmeranschlusses TA1...6 innerhalb der Gruppe NWHG.

Das erfindungsgemäße Zusammenfassen der an unterschiedlichen Vermittlungseinrichtungen LE1...3 angeschlossenen Kommunikationsendeinrichtungen KE1...6 bzw. das Zusammenfassen der physikalisch unterschiedlichen Vermittlungseinrichtungen LE1...3 zugeordneten Teilnehmeranschlüsse TA1...6 erfolgt in mehreren Schritten. Erfindungsgemäß können unterschiedlich ausgestaltete Teilnehmeranschlüsse TA1...6, d.h. ISDN-Basisanschlüsse, ISDN-Primärmultiplexanschlüsse und ein xDSL-Übertragungsverfahren realisierende Teilnehmeranschlüsse einer übergeordneten Gruppe NWHG zugeordnet werden. Die zu einer Gruppe NWHG zusammenzufassenden Teilnehmeranschlüsse TA1...6 können bereits Teilnehmeranschluß-individuelle Leistungsmerkmale aufweisen. Beispiele für Teilnehmeranschluß-individuelle Leistungsmerkmale sind der ISDN-Suplementary Service "Multiple Subscriber Number MSN" bzw. die vergleichbaren analogen Leistungsmerkmale "Primary DN" und "Secondary DN". In Verbindung mit den genannten Leistungsmerkmalen können auch weitere Leistungsmerkmale wie Geheimrufnummer oder Klingelzeichen in Abhängigkeit von der gewählten Teilnehmerrufnummer genutzt werden. Die Teilnehmeranschluß-individuellen Leistungsmerkmale können für die verschiedenen zu übermittelnden Informationsarten - beispielsweise Sprache, Fax, Daten - individuelle konfiguriert werden - z.B. hinsichtlich Umlenkarten und Umlenkziele.

In einem ersten Schritt wird bestimmt, durch welche der Vermittlungseinrichtungen LE1...3 die Verwaltung bzw. Steuerung der zu bildenden Gruppe NWHG erfolgen soll. In diesem Ausführungsbeispiel soll die zu bildende Gruppe NWHG durch die erste Vermittlungseinrichtung LE1 gesteuert werden. Im Folgendem wird die die Gruppe NWHG steuernde erste Vermittlungseinrichtung auch als Kontroll-Vermittlungseinrichtung LE1 bezeichnet. Alternativ kann die Gruppe NWHG auch durch eine weitere im Kommunikationsnetz KN angeordnete Vermittlungseinrichtung - nicht dargestellt - gesteuert werden. Zur Realisierung der Gruppe NWHG wird in der Datenbasis DB der ersten Vermittlungseinrichtung LE1 eine die Gruppe NWHG repräsentierende Organisationseinheit OGRP eingerichtet und gespeichert. In der die Gruppe NWHG repräsentierenden Organisationseinheit OGRP wird die zugewiesene gruppenindividuelle Pilot-Rufnummer PDN sowie das ausgewählte Such-Verfahren repräsentierende Informationen HUNT gespeichert. In der Organisationseinheit OGRP können weitere gruppenindividuellen Informationen gespeichert werden, durch welche weitere der Gruppe NWHG zuzuordnende, gruppenindividuelle Eigenschaften bestimmt bzw. definiert sind.

Die der Gruppe NWHG zuzuordnenden, physikalisch nicht in der Kontroll-Vermittlungseinrichtung LE1 angeordneten Teilnehmeranschlüsse - hier TA1, TA3, TA6, TA4 - werden per Administration der Kontroll-Vermittlungseinrichtung LE1 als virtuelle Teilnehmeranschlüsse zugeordnet. Für die virtuell zugeordneten Teilnehmeranschlüsse TA1, TA3, TA6, TA4 sind in der Datenbasis DB der Kontroll-Vermittlungseinrichtung LE1 Adressierungsinformationen TR1,2 vorgesehen, mittels denen jeweils eine Kommunikationsbeziehung von der Kontroll-Vermittlungseinrichtung LE1 zu den jeweiligen physikalisch nicht in der Kontroll-Vermittlungseinrichtung LE1 angeordneten Teilnehmeranschlüssen TA1,3,4,6 eingerichtet werden kann. Im Folgenden werden die physikalisch nicht der Kontroll-Vermittlungseinrichtung zugeordneten Teilnehmeranschlüsse TA1,3,4,6 auch als externe Teilnehmeranschlüsse bezeichnet. Für die virtuellen Teilnehmeranschlüsse TA1, TA3, TA6, TA4 sind in der Datenbasis DB der Kontroll-Vermittlungseinrichtung LE1 weitere Verwaltungs- bzw. Adressierungsinformationen vorgesehen - beispielsweise die den externen Teilnehmeranschlüssen TA1,3,4,6 zugeordneten Teilnehmerrufnummern DN1, DN3, DN6, DN4, die für eine A-seitige Zugangsberechtigungsprüfung oder zu einer B-seitigen Rufzustellung benötigt werden.

Die der Gruppe NWHG zuzuordnenden virtuellen Teilnehmeranschlüsse TA1, TA3, TA6, TA4 sowie die physikalisch der Kontroll-Vermittlungseinrichtung LE3 zugeordneten Teilnehmeranschlüsse TA2, TA5 werden mit der Organisationseinheit OGRP verknüpft. Dazu werden die entsprechenden Teilnehmeranschlüsse TA2,5 bzw. die entsprechenden, virtuellen Teilnehmeranschlüsse TA1,3,4,6 repräsentierende Informationen in der Organisationseinheit OGRP gespeichert. Beispielsweise werden die den jeweiligen Teilnehmeranschlüssen TA1...6 zugeordneten Teilnehmerrufnummern DN1...6 in der Organisationseinheit OGRP gespeichert, wobei für die virtuellen Teilnehmeranschlüsse TA1,3,4,6 ein Zuordnung der Adressierungsinformationen TR1, 2 und der entsprechenden Teilnehmerrufnummern DN1,3,4,6 zugeordnet ist.

Durch die Verknüpfung mit der Organisationseinheit OGRP ist jeder Teilnehmeranschluß TA1...6 sowohl über die jeweiligen Teilnehmeranschluß-individuellen Teilnehmerrufnummern DN1...6 als auch über die der Gruppe NWHG zugeordnete Pilot-Rufnummer PDN - falls der jeweilige Teilnehmeranschluß TA1...6 mit Hilfe des Such-Verfahrens ausgewählt wird - erreichbar. Wird die der Gruppe NWHG zugeordnete Pilot-Rufnummer PDN gewählt, so gelten die aktuell der Gruppe NWHG bzw. der Organisationseinheit OGRP zugeordneten, gruppenindividuellen Leistungsmerkmale bzw. Eigenschaften. Bei der Wahl einer der den Teilnehmeranschlüssen TA1...6 zugeordneten Teilnehmeranschluß-individuellen Teilnehmerrufnummern DN1...6 gelten die dem jeweiligen Teilnehmeranschluß TA1...6 zugeordneten, Teilnehmeranschluß-individuellen Leistungsmerkmale. Bei einem von der Kommunikationsendeinrichtung KE1...6 initiierten Aufbau einer Kommunikationsbeziehung gelten die der jeweiligen signalisierten Rufnummer zugeordneten Teilnehmerleistungsmerkmale; alternativ können auch die jeweiligen Leistungsmerkmale derjenigen Teilnehmerrufnummer gelten, die administrativ voreingestellt wurde.

Im folgenden wird die Verknüpfung der zu der Gruppe NWHG zusammenfassenden Teilnehmeranschlüsse TA1...6 innerhalb der Organisationseinheit OGRP näher erläutert. In der Organisationseinheit OGRP ist für jedes Mitglied der Gruppe NWHG, d.h. für jeden zugeordneten Teilnehmeranschluß TA1...6 ein Datensatz DS1...6 vorgesehen. Im ersten Datensatz DS1 sind den externen ersten Teilnehmeranschluß TA1 repräsentierende Informationen gespeichert. Neben der dem ersten Teilnehmeranschluß TA1 zugeordneten Teilnehmerrufnummer DN1 ist eine den ersten Teilnehmeranschluß TA1 als virtuellen Teilnehmeranschluß kennzeichnende Information - hier "virt" - sowie eine die Art des ersten Teilnehmeranschluß TA1 repräsentierende Information - hier ISDN-Basisanschluß = "ba" - und eine entsprechende Adressierungsinformation - hier eine die erste Zwischenamtsleitung TR1 repräsentierende Information "trk1" gespeichert. Des Weiteren ist im ersten Datensatz DS1 eine den aktuellen vermittlungstechnischen und betriebstechnischen Zustand repräsentierende Information "b/i" gespeichert.

Im zweiten Datensatz DS2 ist die dem zweiten Teilnehmeranschluß TA2 zugeordnete Teilnehmerrufnummer DN2 gespeichert.

Des Weiteren ist im zweiten Datensatz DS2 eine den zweiten Teilnehmeranschluß TA2 als realen, d.h. der Kontroll-Vermittlungseinrichtung physikalisch zugeordneten Teilnehmeranschluß kennzeichnende Information "real" und eine einen ISDN-Basisanschluß repräsentierende Information "ba" gespeichert. Die restlichen in FIG 1 dargestellten Einträge in den Datensätzen DS3 - DS6 sind selbsterläuternd. So ist der dritte Teilnehmeranschluß TA3 als virtueller, analoger Teilnehmeranschluß gekennzeichnet, der über die erste Zwischenamtsleitung TR1 mit der Kontroll-Vermittlungseinrichtung LE1 verbunden ist. Der vierte Teilnehmeranschluß TA4 ist als virtueller, Mobilfunk-konformer Teilnehmeranschluß gekennzeichnet, welcher über die zweite Zwischenamtsleitung TR2 mit der Kontroll-Vermittlungseinrichtung LE1 verbunden ist. Der fünfte Teilnehmeranschluß TA5 ist als realer Teilnehmeranschluß, d.h. physikalisch der Kontroll-Vermittlungseinrichtung LE1 zugeordneter Teilnehmeranschluß gekennzeichnet, welcher gemäß dem ADSL-Übertragungsverfahren ausgestaltet ist. Der sechste Teilnehmeranschluß TA6 ist als virtueller ISDN-Basisanschluß gekennzeichnet, welcher über die zweite Zwischenamtsleitung TR2 mit der Kontroll-Vermittlungseinrichtung LE1 verbunden ist.

Für die Realisierung des erfindungsgemäßen Verfahrens ist es erforderlich, daß alle aufzubauende Kommunikationsbeziehungen von und zu den der Gruppe NWHG zugeordneten Teilnehmeranschlüssen TA1...6 bzw. von und zu den daran angeschlossenen Kommunikationsendeinrichtungen über die Kontroll-Vermittlungseinrichtung LE1 geführt werden. Dies wird auch als "RufKanalisierung" bezeichnet. Durch die "Ruf-Kanalisierung" kann der jeweilige aktuelle vermittlungstechnische und betriebstechnische Zustand der Teilnehmeranschlüsse TA1...6 bzw. Kommunikationsendeinrichtungen KE1...6 durch die Kontroll-Vermittlungseinrichtung LE1 erfaßt werden - auch als "Busy/Idle-Handling" bezeichnet - und als vermittlungstechnische Informationen bi in den jeweiligen Datensätzen DS1...6 der Organisationseinheit OGRP gespeichert werden. Der aktuelle betriebstechnische und vermittlungstechnische Zustand der jeweiligen Teilnehmeranschlüsse TA1...6 ist für eine ordnungsgemäße Durchführung des Such-Verfahrens zur Ermittlung eines freien Teilnehmeranschlusses TA1...6 innerhalb der Gruppe NWHG erforderlich.

Die Rufkanalisierung kann auf unterschiedliche Weise realisiert werden, wobei die jeweiligen Datenbasen DB der drei Vermittlungseinrichtungen LE1...3 sowie optional die Datenbasen von im Kommunikationsnetz KN angeordneten weiteren Vermittlungseinrichtungen - nicht dargestellt - per Administration so eingestellt werden, daß Kommunikationsbeziehungen bzw. ankommende und abgehende Rufe von und zu den der Gruppe NWHG zugeordneten, externen Teilnehmeranschlüssen TA1,3,4,6 stets über die Kontroll-Vermittlungseinrichtung LE1 vermittelt werden.

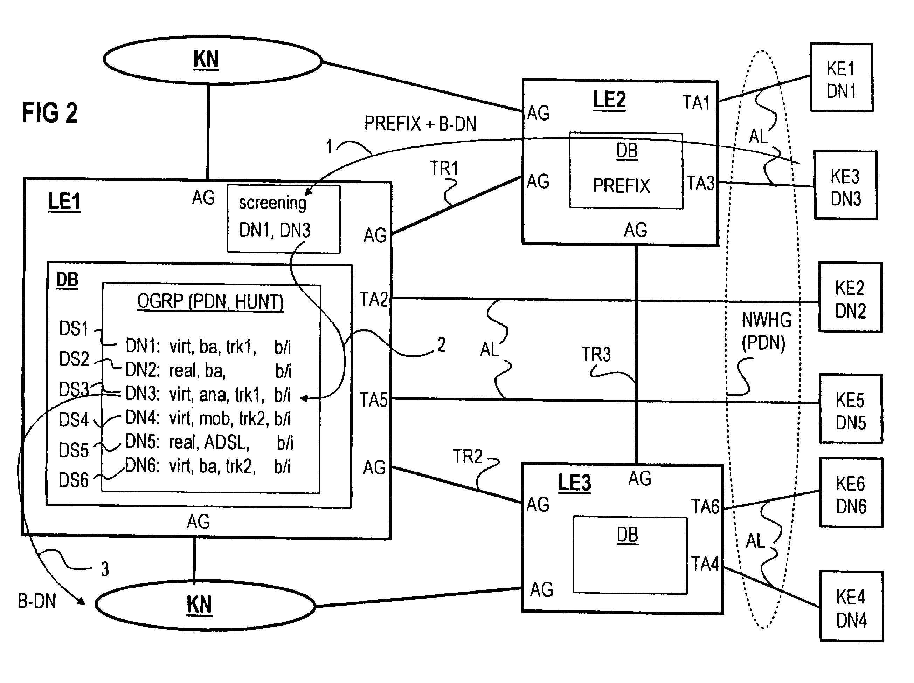

FIG 2 zeigt die Rufkanalisierung für von externen Teilnehmeranschlüssen TA1,3,4,6 abgehenden Kommunikationsbeziehungen. In FIG 2 ist beispielhaft ein von der dritten Kommunikationsendeinrichtung KE3 initiierter Aufbau einer Kommunikationsbeziehung dargestellt. In Vermittlungseinrichtungen - hier LE2 und LE3 - mit darin angeordneten, der Gruppe NWHG zugeordneten, externen Teilnehmeranschlüssen TA1,3,4,6 werden spezielle Zugangscodes PREFIX bzw. "ACCESS-Codes" - auch als "Prefix" bezeichnet - eingerichtet. Dieser "ACCESS-Code" wird bei einem von einem externen Teilnehmeranschluß TA1,3,4,6 der Gruppe NWHG - hier TA3 - initiierten Aufbau einer Kommunikationsbeziehung der Ziel-Rufnummer - hier B-DN - des gewünschten B-Teilnehmers vorangestellt - hier PREFIX + B-DN. Durch das Voranstellen des "ACCESS-Codes" wird die aufzubauende Kommunikationsbeziehung an die Kontroll-Vermittlungseinrichtung LE1 vermittelt bzw. geroutet - durch einen ersten Pfeil verdeutlicht. Ein "ACCESS-Code" ist vergleichbar mit den "Carrier Access-Codes", mit denen z.B. in aktuellen deregulierten Kommunikationsnetzen alternative Netzbetreiber auswählbar sind. Dieses Verfahren wird auch als "Call-by-Call-Verfahren" bezeichnet. Das "Call-by-Call-Verfahren" wird von allen in aktuellen, deregulierten Kommunikationsnetzen eingesetzten Vermittlungseinrichtungen unterstützt. Um eine manuelle Eingabe des "ACCESS-Codes" zu vermeiden, kann eine weitere, in aktuellen deregulierten Kommunikationsnetzen bekannte Funktion "Preselection" genutzt werden. Beim "Preselection"-Verfahren wird bei jedem abgehenden Ruf automatisch von der jeweiligen Vermittlungseinrichtung LE2,3 der voreingestellte "ACCESS-Code" vor die gewählte B-Rufnummer des gewünschten Teilnehmers eingefügt. Der Nutzer des "Preselection"-Verfahrens muß entsprechend gekennzeichnet sein. Die über die Zwischenamtsleitungen an die Kontroll-Vermittlungseinrichtung LE1 vermittelten Kommunikationsbeziehungen werden durch ein als "screening" bezeichnetes Identifizierungsverfahren anhand der übermittelten A-Rufnummer - hier DN3 - identifiziert. Das Übermitteln der A-Rufnummer erfolgt beispielsweise im Rahmen des vermittlungstechnischen Dienstes "Calling Line Identification", CLI. Mit Hilfe der übermittelten A-Rufnummer DN3 wird in der Datenbasis DB der Kontroll-Vermittlungseinrichtung LE1 der entsprechende Datensatz - hier DS3 - in der Organisationseinheit OGRP ermittelt und der jeweilige Teilnehmeranschluß TA3 als virtueller Teilnehmeranschluß identifiziert - durch einen zweiten Pfeil verdeutlicht. Anschließend wird die Kommunikationsbeziehung an die Ziel-Rufnummer B-DN bzw. in das Kommunikationsnetz KN weitervermittelt - durch einen dritten Pfeil verdeutlicht.

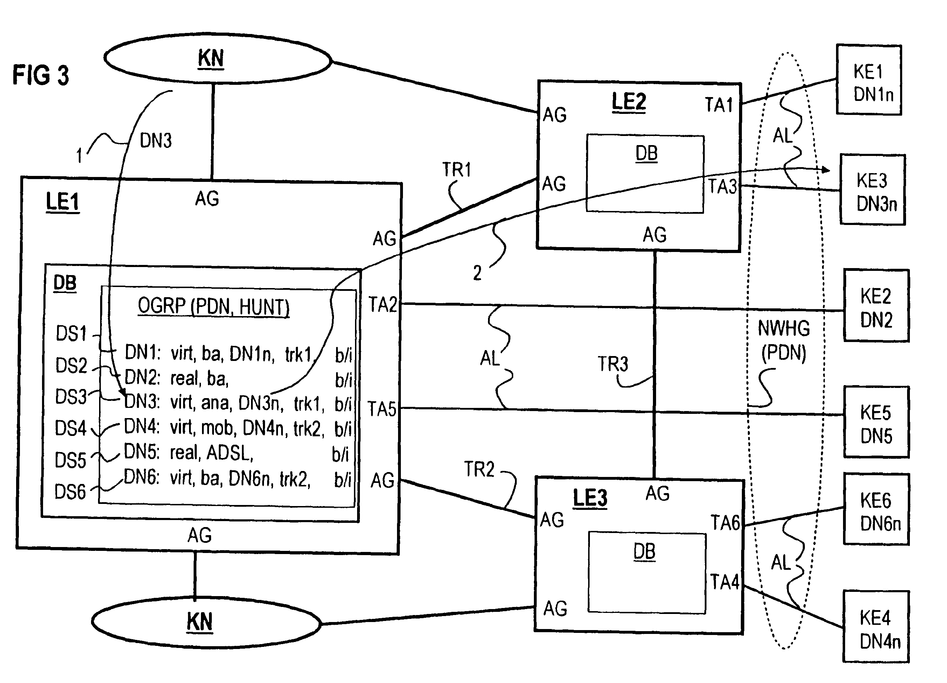

FIG 3 zeigt eine erste Realisierungsvariante der Rufkanalisierung von in Richtung externer Teilnehmeranschlüsse TA1,3,4,6 zu vermittelnden Kommunikationsbeziehungen mittels Modifikation der Teilnehmerrufnummern und mittels administrativer Anpassung des Routings innerhalb des Kommunikationsnetzes KN. Die Teilnehmerrufnummern DN1, DN3, DN6, DN4 der in der zweiten und dritten Vermittlungseinrichtung LE2, LE3 angeordneten, externen Teilnehmeranschlüsse TA1, TA3, TA6, TA4 bzw. die Teilnehmerrufnummern DN1, DN3, DN6, DN4 der daran angeschlossenen Kommunikationsendeinrichtungen KE1,3,4,6 werden administrativ derart modifiziert, daß diese nicht mehr direkt, d.h. vom Kommunikationsnetz KN aus, anwählbar sind, jedoch noch zum Routing bzw. zur Vermittlung zwischen den Vermittlungseinrichtungen LE2, LE3 und der Kontroll-Vermittlungseinrichtung LE1 verwendet werden können. Die modifizierten Teilnehmerrufnummern - auch als virtuelle Teilnehmerrufnummern bezeichnet, hier DN1n, DN3n, DN4n, DN6n - werden beispielsweise mittels eines einfachen Algorithmus aus den ursprünglichen Teilnehmerrufnummern DN1,3,4,6 abgeleitet und in den Datenbasen DB der Vermittlungseinrichtungen LE1...3 gespeichert. Die Modifikation der Teilnehmerrufnummern DN1, DN3, DN6, DN4 kann z.B. dadurch erreicht werden, daß der jeweiligen Teilnehmerrufnummer eine Ziffer aus dem hexadezimalen Zahlenbereich vorangestellt wird. Beispielsweise wird eine Teilnehmerrufnummer DNX = 72 26 14 90 in die entsprechend modifizierte Teilnehmerrufnummer DNXn = E72 26 14 90 umgewandelt. Die ursprünglichen Teilnehmerrufnummern DN1, DN3, DN6, DN4 der externen Teilnehmeranschlüsse TA1, TA3, TA6, TA4 werden dem entsprechenden virtuellen Teilnehmeranschluß in der Kontroll-Vermittlungseinrichtung LE1 zugeordnet bzw. im entsprechenden Datensatz DS1, DS3, DS6, DS4 der Organisationseinheit OGRP gespeichert und der entsprechenden virtuellen Teilnehmerrufnummer DN1, DN3n, DN4n, DN5n zugeordnet. Des Weiteren werden die im Kommunikationsnetz KN angeordneten Routing-Tabellen - nicht dargestellt - so angepaßt, daß eine Wahl der ursprünglich einem externen Teilnehmeranschluß TA1,3,4,6 zugeordneten Teilnehmerrufnummern - hier DN3 - zu einer Verbindung zu der Kontroll-Vermittlungseinrichtung LE1 führt - durch einen ersten Pfeil verdeutlicht. Nach einer Überprüfung des aktuellen vermittlungstechnischen Zustandes des dem gewählten Teilnehmeranschluß TA3 zugeordneten virtuellen Teilnehmeranschlusses durch Auswertung der entsprechenden vermittlungstechnischen Informationen bi im entsprechenden Datensatz - hier DS3 - wird bei Feststellen eines freien Teilnehmeranschlusses TA3 mit Hilfe der im Datensatz DS3 gespeicherten Adressierungsinformationen bzw. virtuellen Teilnehmerrufnummer TR1,DN3n die gewünschte Kommunikationsbeziehung von der Kontroll-Vermittlungseinrichtung LE1 über die erste Zwischenamtsleitung TA1 an den dritten Teilnehmeranschluß TA3 weitervermittelt - durch einen zweiten Pfeil verdeutlicht.

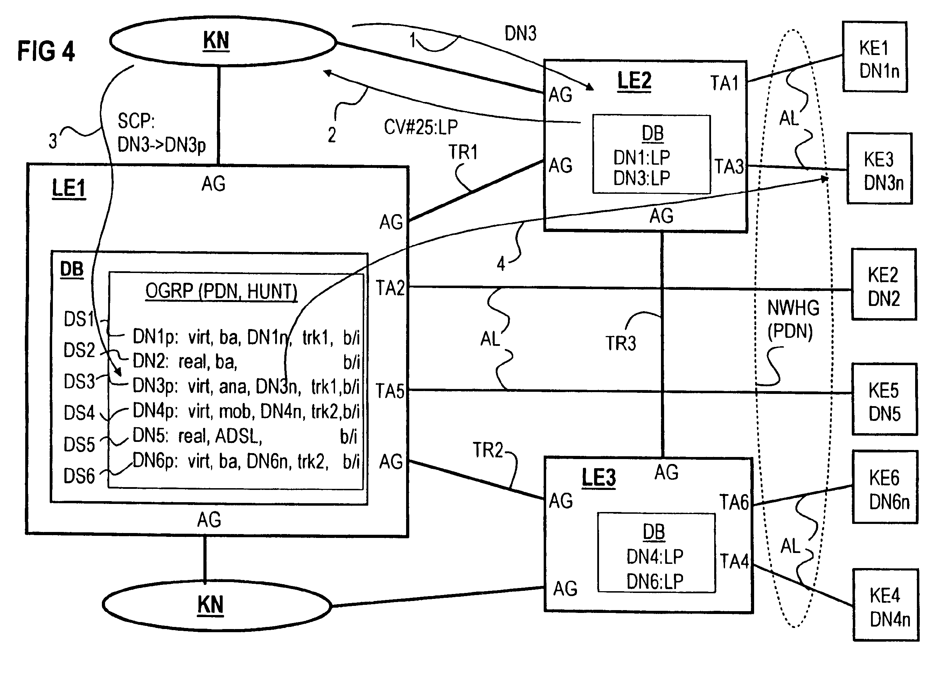

FIG 4 zeigt eine zweite Realisierungsvariante der Rufkanalisierung von in Richtung externer Teilnehmeranschlüsse TA1,3,4,6 zu vermittelnden Kommunikationsbeziehungen mittels Modifikation der Teilnehmerrufnummer DN1,3,4,6 und Ausnutzung des vermittlungstechnischen Leistungsmerkmales "Nummernportabilität" bzw. "number portability". Wie bereits in der ersten Realisierungsvariante beschrieben, werden die Teilnehmerrufnummern DN1, DN3, DN6, DN4 der in der zweiten und dritten Vermittlungseinrichtung LE2, LE3 angeordneten externen Teilnehmeranschlüsse TA1, TA3, TA6, TA4 per Administration derart modifiziert, daß diese nicht mehr direkt, d.h. vom Kommunikationsnetz KN aus, anwählbar sind, jedoch noch zum Routing bzw. zur Vermittlung zwischen den Vermittlungseinrichtungen LE2, LE3 und der Kontroll-Vermittlungseinrichtung LE1 verwendet werden können. Die ursprünglich den externen Teilnehmeranschlüssen TA1, TA3, TA4, TA6 zugeordneten Teilnehmerrufnummern DN1, DN3, DN4, DN6 werden als "portiert" gekennzeichnet, wobei eine entsprechende, die Portierung repräsentierende Information - hier "LP" - in der Datenbasis DB der zweiten und dritten Vermittlungseinrichtung LE2, LE3 gespeichert wird. Den als portiert gekennzeichneten Teilnehmeranschlüssen TA1, TA3, TA4, TA6 wird eine weitere Portierungs-Teilnehmerrufnummer DN1p, DN3p, DN4p, DN6p zugeordnet, welche sowohl im übergeordneten Kommunikationsnetz KN als auch in den entsprechenden Datensätzen DS1, 3, 4, 6 der Organisationseinheit OGRP gespeichert werden. Beim Aufbau einer Kommunikationsbeziehung aus dem Kommunikationsnetz KN unter Verwendung der ursprünglichen Teilnehmerrufnummer - hier DN3 - wird die Kommunikationsbeziehung zuerst an die entsprechende, den gewählten Teilnehmeranschluß - hier TA3 - aufweisende zweite Vermittlungseinrichtung LE2 vermittelt - durch einen ersten Pfeil verdeutlicht. Dadurch, daß der gewählte Teilnehmeranschluß TA3 als portiert gekennzeichnet ist, wird die Kommunikationsbeziehung von der zweiten Vermittlungseinrichtung LE2 in das Kommunikationsnetz KN zurückvermittelt, wobei zusätzliche Informationen - hier z.B. "CV#25:LP" - an im Kommunikationsnetz KN angeordnete, Funktionen eines "Intelligenten Netzes" realisierende Komponenten - z.B. SCP, Service Controll Point - übermittelt werden. Im Rahmen der durch das Intelligente Netz bereitgestellten Funktionen wird die der ursprünglichen Teilnehmerrufnummer DN3 zugeordnete weitere Portierungs-Teilnehmerrufnummer - hier DN3p - ermittelt, durch welche die Kommunikationsbeziehung an die Kontroll-Vermittlungseinrichtung LE1 weitervermittelt wird - durch einen dritten Pfeil verdeutlicht. In der Kontroll-Vermittlungseinrichtung LE1 wird die gewählte Portierungs-Teilnehmerrufnummer DN3p in der Organisationseinheit OGRP als Mitglied der Gruppe NWHG identifiziert und nach einer Überprüfung des aktuellen vermittlungstechnischen und betriebstechnischen Zustandes des entsprechenden Teilnehmeranschlusses TA3 die Kommunikationsbeziehung mit Hilfe der im entsprechenden Datensatz DS3 gespeicherten Adressierungsinformationen bzw. virtuellen Teilnehmerrufnummer trk1,DN3n über die erste Zwischenamtsleitung TR1 an den dritten Teilnehmeranschluß TA3 weitervermittelt - durch einen vierten Pfeil verdeutlicht.

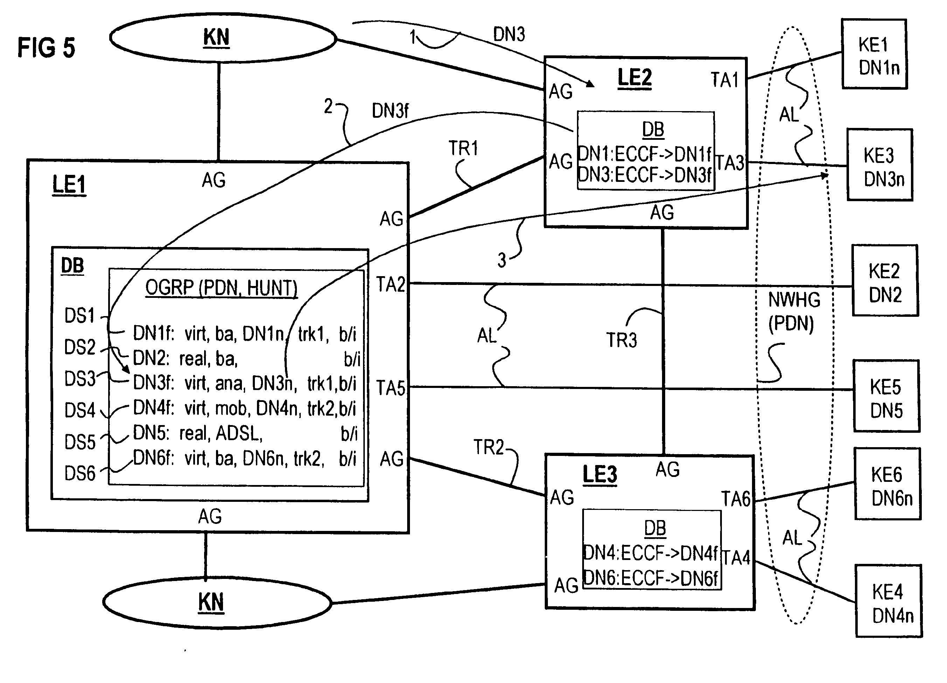

FIG 5 zeigt eine dritte Realisierungsvariante der Rufkanalisierung von in Richtung externer Teilnehmeranschlüsse TA1,3,4,6 zu vermittelnden Kommunikationsbeziehungen mittels "automatischer Anrufumlenkung" von externen Teilnehmeranschlüssen TA1, TA3, TA4, TA6 auf die Kontroll-Vermittlungseinrichtung LE1. Die "automatische Anrufumlenkung" - auch als "Exchange Controlled Call Forwarding", ECCF bezeichnet - stellt ein durch Vermittlungseinrichtungen bereitgestelltes vermittlungstechnisches Leistungsmerkmal dar. Wie bereits in den beiden ersten Realisierungsvarianten beschrieben, werden die Teilnehmerrufnummern DN1, DN3, DN6, DN4 der in der zweiten und dritten Vermittlungseinrichtung LE2, LE3 angeordneten, externen Teilnehmeranschlüsse TA1, TA3, TA6, TA4 per Administration derart modifiziert, daß diese nicht mehr direkt, d.h. vom Kommunikationsnetz KN aus, anwählbar sind, jedoch noch zum Routing bzw. zur Vermittlung zwischen den Vermittlungseinrichtungen LE2, LE3 und der Kontroll-Vermittlungseinrichtung LE1 verwendbar sind. Des Weiteren wird für die ursprünglich den Teilnehmeranschlüssen TA1, TA3, TA4, TA6 zugeordneten Teilnehmerrufnummern DN1, DN3, DN6, DN4 eine unbedingte Anrufumlenkung auf die Kontroll-Vermittlungseinrichtung LE1 eingerichtet und entsprechende Informationen - hier ECCF - in den Datenbasen DB der zweiten und dritten Vermittlungseinrichtung LE2,3 gespeichert. Dies wird beispielsweise durch die Zuordnung einer entsprechenden Routing-Information - hier DN1f, DN3f, DN4f, DN6f - zu den jeweiligen Teilnehmeranschlüssen TA1,3,4,6 erreicht, wobei die Routing-Informationen DN1f, DN3f, DN4f, DN6f in den Datenbasen DB der zweiten und dritten Vermittlungseinrichtung LE2, 3 und zusätzlich in den entsprechenden Datensätzen DS1, DS3, DS4, DS6 der Organisationseinheit OGRP gespeichert werden. Soll beispielsweise aus dem Kommunikationsnetz KN eine Kommunikationsbeziehung an den dritten Teilnehmeranschluß TA3 vermittelt werden, wird diese Kommunikationsbeziehung anhand der gewählten Teilnehmerrufnummer DN3 zuerst an die den gewählten Teilnehmeranschluß TA3 aufweisende zweite Vermittlungseinrichtung LE2 vermittelt - durch einen ersten Pfeil verdeutlicht. Durch die in der Datenbasis DB der zweiten Vermittlungseinrichtung LE2 gespeicherte unbedingte Anrufumlenkung - hier z.B. "DN3: ECCF -> DN3f" - wird die Kommunikationsbeziehung an die Kontroll-Vermittlungseinrichtung LE1 umgelenkt bzw. weitervermittelt - durch einen zweiten Pfeil verdeutlicht. Mit Hilfe der im Rahmen der umgelenkten Kommunikationsbeziehung übermittelten Informationen - hier DN3f - wird durch die Kontroll-Vermittlungseinrichtung LE1 in der Organisationseinheit OGRP der entsprechende Datensatz DN3 ermittelt und die Kommunikationsbeziehung mit Hilfe der im Datensatz DN3 gespeicherten Adressierungsinformation trk1,DN3n über die erste Zwischenamtsleitung TR1 an den dritten Teilnehmeranschluß TA3 weitervermittelt - durch einen dritten Pfeil verdeutlicht.

Die in FIG 2, FIG 3 und FIG 4 und FIG 5 dargestellten Ausgestaltungsvarianten zur Realisierung der Rufkanalisierung basieren auf vermittlungstechnischen Standard-Funktionen, die von allen modernen, in aktuellen Kommunikationsnetzen eingesetzten Vermittlungseinrichtungen bereitgestellt werden.

Nach der Verknüpfung der Teilnehmeranschlüsse TA1...6 in der Organisationseinheit OGRP werden die der Gruppe NWHG zugeordneten Teilnehmeranschlüsse TA1...6 per Administration als frei gekennzeichnet und entsprechende Informationen b/i in den jeweiligen Datensätzen DS1...6 der Organisationseinheit OGRP gespeichert. In einer Einschwingzeit nach der Einrichtung der Gruppe NWHG kann jedoch der Fall auftreten, daß die physikalisch nicht der Kontroll-Vermittlungseinrichtung zugeordneten Teilnehmeranschlüsse TA1, TA3, TA6, TA4 aktuell den vermittlungstechnischen Zustand "belegt" aufweisen, in der Organisationseinheit OGRP jedoch als frei gekennzeichnet sind. Für diesen Fall müssen automatische Korrekturverfahren dafür sorgen, daß die in den jeweiligen Datensätzen DS1,3,4,6 der Organisationseinheit OGRP gespeicherten, den aktuellen vermittlungstechnischen Zustand repräsentierenden Informationen b/i entsprechend korrigiert bzw. synchronisiert werden.

Bei den beschriebenen Realisierungsvarianten der RufKanalisierung müssen nachteilig alle zu vermittelnden Kommunikationsbeziehungen über die Kontroll-Vermittlungseinrichtung LE1 vermittelt werden. Die zentrale Vermittlung über die Kontroll-Vermittlungseinrichtung LE1 ist erforderlich, da durch diese die aktuellen vermittlungstechnischen und betriebstechnischen Zustände der externen Teilnehmeranschlüsse TA1, TA3, TA6, TA4 erfaßt werden müssen. Wie bereits erläutert werden bei der Rufkanalisierung durch das "Tromboning" Netzressourcen vergeudet, was bei räumlich weit verteilten Gruppen nicht mehr akzeptabel ist.

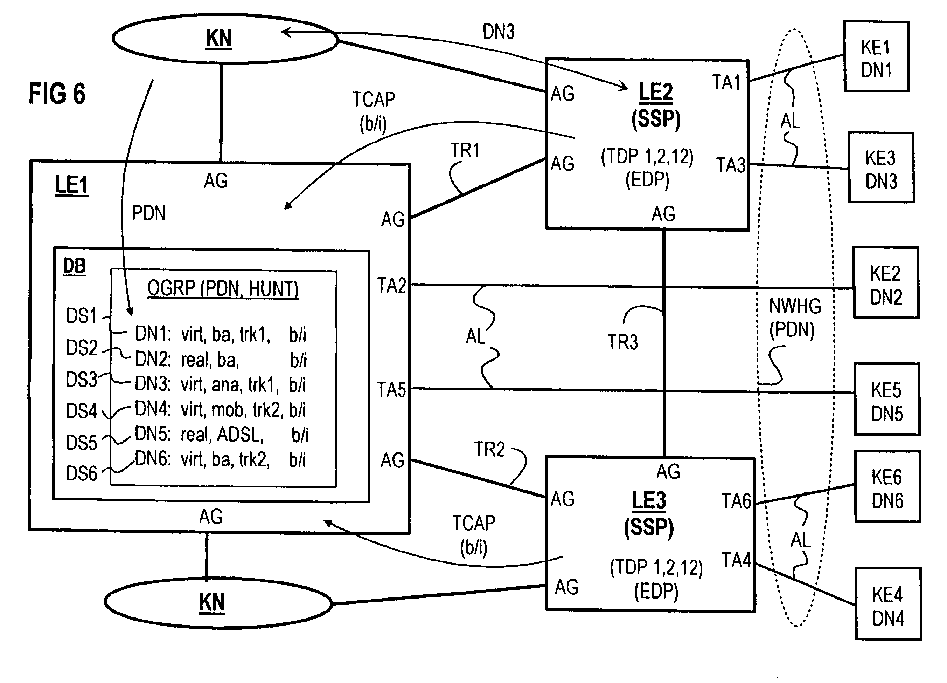

Im folgenden wird eine alternative Ausgestaltungsvariante zur Realisierung des erfindungsgemäßen Verfahrens beschrieben - in FIG 6 schematisch dargestellt -, bei der das Tromboning vermieden wird. Diese alternative Realisierungsvariante setzt voraus, daß die eingesetzten Vermittlungseinrichtungen LE1...3 gewisse Mindest-Standards erfüllen. Vorausgesetzt werden SCCP/TCAP-Fähigkeit sowie Teilfunktionen des Capability Set CS1, wie sie für Service Switching Points - SSPs - in Intelligenten Netzen definiert sind, insbesondere die Unterstützung der Trigger Detection Points TDP1 (oder ersatzweise TDP2) und TDP12.

Für die von den externen Teilnehmeranschlüssen TA1, TA3, TA4, TA6 der Gruppe NWHG abgehenden Kommunikationsbeziehungen wird folgende Konfiguration eingerichtet:

In den Vermittlungseinrichtungen - hier LE2 und LE3 - mit darin angeordneten, der Gruppe NWHG zugeordneten, externen Teilnehmeranschlüssen, TA1, TA3, TA4, TA6 werden Trigger Detection Points TDP1 auf die jeweiligen Teilnehmeranschlüsse TA1, TA3, TA4, TA6 bzw. Teilnehmeranschlußleitungen eingerichtet. Die mit diesen Trigger Detection Points TDP1 verknüpften Steuerparameter werden so eingestellt, daß jedes Mal, wenn durch diese externen Teilnehmer ein Verbindungsaufbau initiiert wird - beispielsweise durch Abnehmen des Hörers (Off-hook Trigger) -, über den Trigger Detection Point TDP1 ein Programmablauf aktiviert wird, der eine TCAP-Transaktion mit der Kontroll-Vermittlungseinrichtung LE1 eröffnet. Mittels Aussenden einer TC_Begin-Message mit einer darin eingefügten IN-Meldung Initial_DP wird die Rufnummer des jeweiligen externen Teilnehmers TA1, TA3, TA4, TA6 der Gruppe NWHG an die Kontroll-Vermittlungseinrichtung LE1 übergeben, um anzuzeigen, daß der jeweilige Teilnehmer TA1, TA3, TA4, TA6 besetzt ist.

Die Kontroll-Vermittlungseinrichtung LE1 reagiert hierauf mit einer Rückantwort TC_Continue, in der mittels einer eingefügten IN-Meldung "Request Report BCSM" die hierauf möglichen Folgeaktionen - auch als Event Detection Points EDPs bezeichnet - im Zuge des Wiederauflegens - auch als "On-hook gehen" bezeichnet - konfiguriert bzw. armiert werden. Dies bedeutet, daß die Teilnehmer-Vermittlungsstellen LE2, LE3 aufgefordert werden, beim Wiederauflegen des jeweiligen externen Teilnehmers TA1, TA3, TA4, TA6 nochmals eine TCAP-Meldung an die Kontroll-Vermittlungseinrichtung LE1 zu übermitteln.

Sobald durch den externen Teilnehmer TA1, TA3, TA4, TA6 die Verbindung beendet wird - beispielsweise durch Auflegen des Hörers - wird über die entsprechend konfigurierten bzw. armierten Event Detection Points EDPs in der jeweiligen Teilnehmer-Vermittlungseinrichtung LE2, LE3 ein Programmablauf aktiviert, der mittels einer TC_End-Message mit einer darin eingefügten IN-Meldung "Event Report BCSM" der Kontroll-Vermittlungseinrichtung LE1 das Ereignis übermittelt und damit die Transaktion beendet.

Alternativ kann der gleiche Ablauf erreicht werden, wenn die selben Aktionen mit dem Trigger Detection Point TDP2 verknüpft werden. Diese Alternative kann dann angewendet werden, wenn es in einem Kommunikationsnetz Vermittlungseinrichtungen von weiteren Herstellern gibt, in denen der Trigger Detection Point TDP1 nicht realisiert ist.

Ersatzweise kann eine Benachrichtigung über das Wiederauflegen auch durch einen separaten "On-hook Trigger" erreicht werden. In diesem Fall entfällt die Konfiguration auf die Wiederauflege-Aktion des Hörers mittels der Meldung "Request Report BCSM" und damit auch der zusätzlich damit verbundene Meldungsablauf. Die Transaktion würde auch nicht bis zum Wiederauflegen des Hörers offen bzw. aktiv bleiben.

Zusätzlich wird für die an die externen Teilnehmeranschlüsse TA1, TA3, TA6, TA4 weiterzuvermittelnden Kommunikationsbeziehungen folgende Konfiguration eingerichtet:

Unter Umgehung des Huntings über die gesamte Gruppe NWHG können die externen Teilnehmeranschlüsse TA1, TA3, TA4, TA6 auch direkt angerufen werden. In diesem Fall muß die Kontroll-Vermittlungseinrichtung LE1 über die aktuellen Belegzustände der externen Teilnehmeranschlüsse TA1, TA3, TA4, TA6 informiert werden, wenn der entsprechende Teilnehmeranschluß TA1, TA3, TA4, TA6 bzw. die entsprechende Anschlußleitung nicht mehr für die Leitungsauswahl über die Pilot-Rufnummer PDN der Gruppe NWHG zur Verfügung steht.

In den Vermittlungseinrichtungen LE2, LE3, in denen die jeweiligen externen Teilnehmeranschlüsse, TA1, TA3, TA4, TA6 angeordnet sind, werden Trigger Detection Points TDP12 auf die jeweiligen Teilnehmeranschlußleitungen bzw. Teilnehmeranschlüsse TA1, TA3, TA4, TA6 eingerichtet. Die mit diesen Trigger Detection Point TDP12 verknüpften Steuerparameter werden so eingestellt, daß jedes Mal, wenn eine Kommunikationsbeziehung an diese externen Teilnehmeranschlüsse TA1, 3, 4, 6 vermittelt werden - auch als "Terminating Line Trigger" bezeichnet - über den Trigger Detection Point TDP12 ein Programmablauf in der jeweiligen Vermittlungseinrichtung LE2,3 aktiviert wird, der eine TCAP-Transaktion mit der Kontroll-Vermittlungseinrichtung LE1 eröffnet, wobei eine "TC_Begin Message" mit einer darin eingefügten IN-Meldung "Initial_DP" an die Kontroll-Vermittlungseinrichtung LE1 übermittelt wird. Hierbei wird die Rufnummer des angerufenen externen Teilnehmeranschlusses TA1, 3, 4, 6 an die Kontroll-Vermittlungseinrichtung LE1 übermittelt, um anzuzeigen, daß der jeweilige Teilnehmeranschluß TA1, 3, 4, 6 aktuell besetzt ist. Die Kontroll-Vermittlungseinrichtung LE1 reagiert hierauf mit einer entsprechenden Rückantwort "TC_Continue", in der mittels einer darin eingefügten IN-Meldung "Request Report BSCM" die hierauf möglichen Folgeaktionen bzw. Event Detection Points EDPs im Zuge des Wiederauflegens bzw. "On-hook gehen" armiert werden. Dies bedeutet, daß die entsprechenden Teilnehmer-Vermittlungseinrichtungen LE2, 3 aufgefordert werden, bei Wiederauflegen des externen Teilnehmeranschlusses TA1, 3, 4, 6 eine entsprechende TCAP-Meldung an die Kontroll-Vermittlunsgeinrichtung LE1 zu übermitteln.

Sobald ein Auflegen am externen Teilnehmeranschluß TA1, 3, 4, 6 detektiert wird, wird über die entsprechend konfigurierten Event Detection Points EDPs wiederum in der entsprechenden Teilnehmer-Vermittlungseinrichtung LE2, 3, ein Programmablauf aktiviert, durch welchen mittels einer TC_End-Message mit einer darin eingefügten IN-Meldung "Event Report BCSM" der Kontroll-Vermittlungseinrichtung LE1 das Ereignis übermittelt und damit die Transaktion beendet wird.

Den der Gruppe NWHG zugeordneten Teilnehmeranschlüssen TA1...6, bzw. den daran angeschlossenen Kommunikationsendeinrichtungen KE1...6 können weitere gruppenspezifische Leistungsmerkmale bzw. Eigenschaften zugeordnet werden, wobei zusätzliche, die weiteren Leistungsmerkmale und Eigenschaften repräsentierende Informationen in der Organisationseinheit OGRP gespeichert werden. Beispiele für weitere gruppenspezifische Leistungsmerkmale sind:
- Definition eines alternativen Startpunktes des SuchVerfahrens - beispielsweise Definition einer zusätzlichen, einem Teilnehmeranschluß TA1...6 zugeordneten Teilnehmerrufnummer, bei deren Anwahl das Such-Verfahren unabhängig von dem voreingestellten Hunting-Algorithmus bei diesem Teilnehmeranschluß beginnt -,
- Definition einer "Stop-Hunt-Position" - Definition eines Teilnehmeranschlusses TA1...6, bei der das Suchverfahren auf jeden Fall abgebrochen wird, auch wenn noch kein freier Teilnehmeranschluß TA1...6 bzw. eine freie Kommunikationsendeinrichtung KE1...6 ermittelt wurde -,
- Definition einer "Skip-Hunt-Position" - Definition eines Teilnehmeranschlusses TA1...6, der temporär oder dauernd vom Such-Verfahren ausgeschlossen werden soll, auch wenn dieser aktuell frei ist.

Beispiele für weitere der Gruppe NWHG zuordenbare gruppenspezifische Eigenschaften sind:
- Bestimmung einer Rufnummer DN1...6, PDN - z.B. eine individuelle, ISDN-konforme MSN oder die gruppenindividuelle Pilotrufnummer PDN - unter der eine von der Gruppe NWHG ausgehende Kommunikationsbeziehung identifizierbar ist,
- Bestimmung einer Rufnummer DN1...6, PDN auf welche bei von der Gruppe NWHG ausgehenden Kommunikationsbeziehungen die Vergebührung erfolgt.

Die Zuordnung der einzelnen Teilnehmeranschlüsse TA1...6 zu der Gruppe NWHG kann jederzeit geändert werden. So kann zu jedem Zeitpunkt per Administration ein Teilnehmeranschluß TA1...6 aus der Gruppe NWHG entfernt werden. Dazu werden die entsprechenden, den zu entfernenden Teilnehmeranschluß TA1...6 repräsentierenden Informationen in der Organisationseinheit OGRP gelöscht. Nach dem Herauslösen eines Teilnehmeranschlusses TA1...6 aus der Gruppe NWHG werden durch diesen nur noch die bereits konfigurierten, analogen oder ISDN-konformen teilnehmeranschlußindividuellen Teilnehmerleistungsmerkmale bereitgestellt.

Gemäß einer vorteilhaften Weiterbildung des erfindungsgemäßen Verfahrens kann der Gruppe NWHG zumindest eine Warteschlange zugeordnet werden. Warteschlangen sind üblicherweise in Nebenstellenanlagen realisierte Funktionen, welche beispielsweise in Call-Center eingesetzt werden. Zur Zuordnung des Leistungsmerkmals "Warteschlange" zu der eingerichteten Gruppe NWHG wird der in der Kontroll-Vermittlungseinrichtung LE1 gespeicherten Organisationseinheit OGRP ein weiterer Speicherbereich zugeordnet, durch welchen mehrere transiente Wartepositionen realisiert sind. Auf die transienten Wartepositionen kann eine Anzahl von eingehenden Kommunikationsbeziehungen terminiert und auf eine Ansageeinheit weitergeführt werden. Die Warteschlangen-Funktionalität ist derart konfiguriert, daß an eine Teilnehmerrufnummer DN1...6 gerichtete Kommunikationsbeziehungen bzw. Verbindungen in beschriebener Art und Weise - über die Kontroll-Vermittlungseinrichtung LE1 - direkt zur entsprechenden Kommunikationsendeinrichtung KE1...6 vermittelt werden, sofern die entsprechende Kommunikationsendeinrichtung KE1...6 frei ist. Bei an die gruppenindividuelle Pilot-Rufnummer PDN der Gruppe NWHG gerichteten Kommunikationsbeziehungen wird das gruppenindividuelle Such-Verfahren aktiv. Kann im Rahmen des Such-Verfahrens kein freier Teilnehmeranschluß TA1...6 bzw. kein freier Nutzdatenkanal bzw. keine freie Kommunikationsendeinrichtung KE1...6 ermittelt werden, wird die betreffende Kommunikationsbeziehung in die Warteschlange eingereiht. Sobald ein Teilnehmeranschluß TA1...6 bzw. ein Nutzdatenkanal bzw. eine Kommunikationsendeinrichtung KE1...6 als aktuell frei ermittelt wird, wird die in die Warteschlange eingereihte Kommunikationsbeziehung an den frei gewordenen Teilnehmeranschluß weitervermittelt. Bei mehreren in die Warteschlange eingereihten Kommunikationsbeziehungen wird mittels eines Auswahlverfahrens eine Kommunikationsbeziehung aus der Warteschlange ausgewählt und weitervermittelt. Eine Kommunikationsbeziehung kann beispielsweise mit Hilfe des FIFO-Prinzipes oder prioritätsgesteuert ausgewählt werden.

Für Anrufer, die in der Warteschlange eingereiht werden, können Kompositionsansagen angelegt werden. Diese können beispielsweise folgende Komponenten aufweisen:
- eine Begrüßung,
- fallweise eine Ansage, an wievielter Position der Anrufer in die Warteschlange eingereiht wurde,
- fallweise eine Ansage, wie lange die voraussichtliche Wartedauer in der Warteschlange sein wird,
- fallweise Werbeansagen und Musikeinspielungen,
- fallweise eine erneute Begrüßungsansage direkt bevor der Anrufer aus der Warteschlange herausgenommen und weitervermittelt wird.

Das Leistungsmerkmal "Warteschlange" ist insbesondere für Dienstleister interessant, deren Aufträge telefonisch vergeben werden und daraufhin Waren oder Werte vermittelt oder zugestellt werden. Beispiele sind "Pizza Heimservice", Bankgeschäfte über Agenturen, Einkaufsvermittler oder Reisebüros. Durch den Einsatz der Warteschlange werden die Kunden im Besetztfall nicht abgewiesen und können in der Warteschlange schon mit Vorabinformationen versorgt werden. Dadurch wird das Risiko, einen Kunden zu verlieren, minimiert.

## Patentansprüche

1. Verfahren zur Realisierung von zusätzlichen Funktionen für jeweils konfigurierte Teilnehmerleistungsmerkmale aufweisende Teilnehmeranschlüsse (TA1...6), die untereinander verbundenen Vermittlungseinrichtungen (LE1...3) physikalisch zugeordnet sind, bei dem
- zumindest ein Teil der Teilnehmeranschlüsse (TA1...6) von zumindest zwei Vermittlungseinrichtungen (LE1...3) zumindest einer Gruppe (NWHG) zugeordnet wird,
- der zumindest einen Gruppe (NWHG) gruppenindividuelle Leistungsmerkmale und/oder gruppenindividuelle Eigenschaften zuordenbar sind,
**dadurch gekennzeichnet,**
- **daß** von einer der Vermittlungseinrichtungen (LE1) die der Gruppe (NWHG) zugeordneten Leistungsmerkmale und/oder Eigenschaften gesteuert werden, und
- **daß** in der die Gruppe (NWHG) steuernden Vermittlungseinrichtung (LE1) die nicht dieser Vermittlungseinrichtung (LE1) physikalisch zugeordneten Teilnehmeranschlüsse (TA1,3,4,6) der Gruppe (NWHG) als virtuelle Teilnehmeranschlüsse zugeordnet werden,
- **daß** die Vermittlungseinrichtungen (LE1...3) derart administriert sind, daß Kommunikationsbeziehungen von und zu den Teilnehmeranschlüssen (TA1,3,4,6) die physikalisch nicht der die Gruppe (NWHG) steuernden Vermittlungseinrichtung (LE1) zugeordnet sind, im vermittlungstechnischem Sinne über die die Gruppe (NWHG) steuernde Vermittlungseinrichtung (LE1) vermittelt werden,
- **daß** in der die Gruppe (NWHG) steuernden Vermittlungseinrichtung (LE1) in Abhängigkeit von den über die steuernde Vermittlungseinrichtung (LE1) vermittelten Kommunikationsbeziehungen entsprechende, den aktuellen vermittlungstechnischen und/oder betriebstechnischen Zustand der virtuellen Teilnehmeranschlüsse (TA1,3,4,6) repräsentierende Zustandsinformationen abgeleitet und in der die Gruppe steuernden Vermittlungseinrichtung (LE1) gespeichert werden,
- **daß** die den virtuellen Teilnehmeranschlüssen (TA1,3,4,6) zugeordneten gruppenindividuellen Leistungsmerkmale und/oder Eigenschaften in Abhängigkeit von den jeweils aktuell gespeicherten Zustands-Informationen gesteuert werden.

2. Verfahren nach Anspruch 1,
**dadurch gekennzeichnet,**
**daß** die Vermittlungseinrichtungen (LE1...3) integraler Bestandteil eines übergeordneten Kommunikationsnetzes (KN) sind, wobei Kommunikationsbeziehungen von und zu den Teilnehmeranschlüssen (TA1,3,4,6), die physikalisch nicht der die Gruppe (NWHG) steuernden Vermittlungseinrichtung (LE1) zugeordnet sind, im vermittlungstechnischem Sinne über die die Gruppe (NWHG) steuernde Vermittlungseinrichtung (LE1) vermittelt werden,

3. Verfahren zur Realisierung von zusätzlichen Funktionen für jeweils konfigurierte Teilnehmerleistungsmerkmale aufweisende Teilnehmeranschlüsse (TA1...6), die untereinander verbundenen Vermittlungseinrichtungen (LE1...3) physikalisch zugeordnet sind, bei dem
- zumindest ein Teil der Teilnehmeranschlüsse (TA1...6) von zumindest zwei Vermittlungseinrichtungen (LE1...3) zumindest einer Gruppe (NWHG) zugeordnet wird,
- der zumindest einen Gruppe (NWHG) gruppenindividuelle Leistungsmerkmale und/oder gruppenindividuelle Eigenschaften zuordenbar sind,
**dadurch gekennzeichnet,**
- **daß** von einer der Vermittlungseinrichtungen (LE1) die der Gruppe (NWHG) zugeordneten Leistungsmerkmale und/oder Eigenschaften gesteuert werden, und
- **daß** in der die Gruppe (NWHG) steuernden Vermittlungseinrichtung (LE1) die nicht dieser Vermittlungseinrichtung (LE1) physikalisch zugeordneten Teilnehmeranschlüsse (TA1,3,4,6) der Gruppe (NWHG) als virtuelle Teilnehmeranschlüsse zugeordnet werden,
- **daß** die Vermittlungseinrichtungen (LE1...3) derart administriert sind, daß
-- die aktuellen vermittlungstechnischen und/oder betriebstechnischen Zustände der physikalisch nicht der die Gruppe (NWHG) steuernden Vermittlungseinrichtung (LE1) zugeordneten Teilnehmeranschlüsse (TA1,3,4,6) an die die Gruppe (NWHG) steuernde Vermittlungseinrichtung (LE1) übermittelt werden, oder
-- jede Änderung des vermittlungstechnischen und/oder betriebstechnischen Zustands der physikalisch nicht der die Gruppe (NWHG) steuernden Vermittlungseinrichtung (LE1) zugeordneten Teilnehmeranschlüsse (TA1,3,4,6) an die die Gruppe (NWHG) steuernde Vermittlungseinrichtung (LE1) übermittelt wird,
- **daß** in der die Gruppe (NWHG) steuernden Vermittlungseinrichtung (LE1) in Abhängigkeit von den übermittelten Informationen entsprechende, den aktuellen vermittlungstechnische und/oder betriebstechnischen Zustand der virtuellen Teilnehmeranschlüsse (TA1,3,4,6) repräsentierende Zustands-Informationen abgeleitet und gespeichert werden, und
- **daß** die den virtuellen Teilnehmeranschlüssen (TA1,3,4,6) zugeordneten gruppenindividuellen Leistungsmerkmale und/oder Eigenschaften in Abhängigkeit von den jeweils aktuell gespeicherten Zustandsinformationen gesteuert werden.

4. Verfahren nach Anspruch 3,
**dadurch gekennzeichnet,**
**daß** den jeweils aktuellen vermittlungstechnischen und betriebstechnischen Zustand oder die Änderung des vermittlungstechnischen und betriebstechnischen Zustands der physikalisch nicht der die Gruppe (NWHG) steuernden Vermittlungseinrichtung (LE1) zugeordneten Teilnehmeranschlüsse (TA1,3,4,6) repräsentierende Zustands-Informationen (b/i) mit Hilfe des Transaction-Capabilities-Application-Part-Protokolls (TCAP) basierend auf dem Zeichengabeverfahren Nr. 7 übermittelt werden.

5. Verfahren nach Anspruch 4,
**dadurch gekennzeichnet,**
**daß** die Zustands-Informationen (b/i) mittels die Funktionen eines Intelligenten Netzes steuernder Meldungen übermittelt werden.

6. Verfahren nach einem der vorherigen Ansprüche,
**dadurch gekennzeichnet,**
**daß** der zumindest einen Gruppe (NWHG) zumindest eine gruppenindividuelle Gruppen-Rufnummer (PDN) zugeordnet ist.

7. Verfahren nach Anspruch 6,
**dadurch gekennzeichnet,**
**daß** bei einer an die zumindest eine gruppenindividuelle Gruppen-Rufnummer (PDN) zu vermittelnden Kommunikationsbeziehung der zumindest einen Gruppe (NWHG) ein gruppenindividuelles Such-Verfahren bzw. ein Hunting-Algorithmus zum Ermitteln eines freien Teilnehmeranschlusses innerhalb der Gruppe (NWHG) zugeordnet ist.

8. Verfahren nach einem der vorherigen Ansprüche,
**dadurch gekennzeichnet,**
**daß** eine die zumindest eine Gruppe (NWHG) repräsentierende Organisationseinheit (OGRP) in einer Datenbasis (DB) der die Gruppe (NWHG) steuernden Vermittlungseinrichtung (LE1) vorgesehen ist, wobei
- die der Gruppe (NWHG) zugeordneten Teilnehmeranschlüsse (TA1...6) repräsentierende Anschlußinformationen (DN1...6, DN1p, DN3p, DN4p, DN6p, DN1f, DN3f, DN4f, DN6f), und
- die der Gruppe (NWHG) zugeordneten gruppenindividuellen Leistungsmerkmale und/oder Eigenschaften repräsentierende Informationen (PDN, HUNT)
in der Organisationseinheit (OGRP) gespeichert sind.

9. Verfahren nach Anspruch 7 oder 8,
**dadurch gekennzeichnet,**
**daß** der Gruppe (NWHG) zumindest eine gruppenindividuelle Warteschlange zugeordnet ist, wobei für den Fall, daß im Rahmen des Such-Verfahrens kein freier Teilnehmeranschluß (TA1...6) ermittelt wird, die zu vermittelnde Kommunikationsbeziehung in der zumindest einen Warteschlange eingereiht wird und nach Feststellen eines freien Teilnehmeranschlusses (TA1...6) die Kommunikationsbeziehung aus der Warteschlange herausgelöst und an den freien Teilnehmeranschluß (TA1...6) weitervermittelt wird.

10. Verfahren nach Anspruch 9,
**dadurch gekennzeichnet,**
**daß** der Organisationseinheit (OGRP) ein die zumindest eine Warteschlange repräsentierender, zumindest eine Warteposition realisierender Speicherbereich in der Datenbasis (DB) der die Gruppe (NWHG) steuernden Vermittlungseinrichtung (LE1) zugeordnet ist.

11. Verfahren nach einem der Ansprüche 7 bis 10,
**dadurch gekennzeichnet,**
**daß** durch einen Teilnehmeranschluß (TA1...6) zumindest ein im Rahmen des Such-Verfahrens vermittelbarer Nutzdatenkanal für eine Informationsübermittlung bereitgestellt wird.

12. Verfahren nach Anspruch 11,
**dadurch gekennzeichnet,**
**daß** bei einem mehrere Nutzdatenkanäle aufweisenden Teilnehmeranschluß (TA1...6) die Anzahl der im Rahmen des Such-Verfahrens für den Teilnehmeranschluß (TA1...6) vermittelbaren Nutzdatenkanäle vorgebbar ist.

13. Verfahren nach einem der Ansprüche 7 bis 12,
**dadurch gekennzeichnet,**
- **daß** dem Teilnehmeranschluß (TA1...6) zumindest eine Teilnehmerrufnummer (DN1...6) zugeordnet ist,
- **daß** im Rahmen des Such-Verfahrens die Anzahl der unter einer Teilnehmerrufnummer (DN1...6) gleichzeitig genutzten Nutzdatenkanäle vorgebbar ist.

14. Verfahren nach einem der vorherigen Ansprüche,
**dadurch gekennzeichnet,**
**daß** den virtuellen Teilnehmeranschlüssen jeweils zumindest eine Adressierungsinformation (DN1,3,4,6, DN1n, 3n, 4n, 5n, DN1f, 3f, 4f, 6f) zugeordnet sind, mit deren Hilfe Kommunikationsbeziehungen zwischen der die Gruppe (NWHG) steuernden Vermittlungseinrichtung (LE1) und den Teilnehmeranschlüssen (TA1,3,4,6), die physikalisch nicht der steuernden Vermittlungseinrichtung (LE1) zugeordnet sind, eingerichtet werden.

15. Verfahren nach einem der vorherigen Ansprüche,
**dadurch gekennzeichnet,**
**daß** die Vermittlungseinrichtungen (LE1...3) über zumindest eine Zwischenamtsleitung (TR1...3) miteinander verbunden sind.

16. Verfahren nach einem der vorherigen Ansprüche,
**dadurch gekennzeichnet,**
**daß** die Vermittlungseinrichtungen (LE1...3) derart administriert sind, daß eine Kommunikationsbeziehung, welche von einem physikalisch nicht der steuernden Vermittlungseinrichtung (LE1) zugeordneten Teilnehmeranschluß (TA1,3,4,6) an ein durch Ziel-Informationen (B-DN) bestimmtes Ziel zu vermitteln ist, mit Hilfe einer den Ziel-Informationen hinzugefügten Routing-Information (PREFIX) zuerst an die steuernde Vermittlungseinrichtung (LE1) und von dieser an das Ziel vermittelt wird.

17. Verfahren nach einem der Ansprüche 14 bis 16,
**dadurch gekennzeichnet,**
**daß** eine zu einem physikalisch nicht der steuernden Vermittlungseinrichtung (LE1) zugeordneten Teilnehmeranschluß (TA1,3,4,6) zu vermittelnde Kommunikationsbeziehung an die die Gruppe (NWHG) steuernde Vermittlungseinrichtung (LE1) und anschließend mit Hilfe der dem jeweiligen virtuellen Teilnehmeranschluß zugeordneten Adressierungsinformationen (DN1,3,4,6, DN1n,3n,4n,5n, DN1f,3f,4f,6f) an den physikalisch nicht der steuernden Vermittlungseinrichtung (LE1) zugeordneten Teilnehmeranschluß (TA1,3,4,6) weitervermittelt wird.

18. Verfahren nach einem der Ansprüche 14 bis 16,
**dadurch gekennzeichnet,**
- **daß** die physikalisch nicht der steuernden Vermittlungseinrichtung (LE1) zugeordneten Teilnehmeranschlüsse (TA1,3,4,6) im Rahmen des vermittlungstechnischen Leistungsmerkmals "Number Portability" als portiert **gekennzeichnet** werden,
- **daß** eine zu einem physikalisch nicht der steuernden Vermittlungseinrichtung (LE1) zugeordneten Teilnehmeranschluß (TA1,3,4,6) zu vermittelnde Kommunikationsbeziehung im Rahmen des vermittlungstechnischen Leistungsmerkmals "Number Portability" zuerst an die entsprechende Vermittlungseinrichtung (LE2,3), welcher die Teilnehmeranschlüsse (TA1,3,4,6) physikalisch zugeordnet sind, vermittelt und anschließend mittels des vermittlungstechnischen Leistungsmerkmals "Number Portability" an die die Gruppe steuernde Vermittlungseinrichtung (LE1) vermittelt werden und anschließend mit Hilfe der dem jeweiligen virtuellen Teilnehmeranschluß zugeordneten Adressierungsinformationen (DN1,3,4,6, DN1n,3n,4n,5n, DN1f,3f,4f,6f) an den entsprechenden, physikalisch nicht der steuernden Vermittlungseinrichtung (LE1) zugeordneten Teilnehmeranschluß (TA1,3,4,6) weitervermittelt wird.

19. Verfahren nach einem der Ansprüche 14 bis 16,
**dadurch gekennzeichnet,**
**daß** eine zu einem physikalisch nicht der steuernden Vermittlungseinrichtung (LE1) zugeordneten Teilnehmeranschluß (TA1,3,4,6) zu vermittelnde Kommunikationsbeziehung zuerst an die entsprechende Vermittlungseinrichtung (LE2,3), welcher die Teilnehmeranschlüsse (TA1,3,4,6) physikalisch zugeordnet sind, vermittelt werden und anschließend im Rahmen des vermittlungstechnischen Leistungsmerkmals "Anrufumlenkung" an die die Gruppe steuernde Vermittlungseinrichtung (LE1) umgeleitet und anschließend mit Hilfe der dem jeweiligen virtuellen Teilnehmeranschluß zugeordneten Adressierungsinformationen (DN1,3,4,6, DN1n,3n,4n,5n, DN1f,3f,4f,6f) an den entsprechenden, physikalisch nicht der steuernden Vermittlungseinrichtung (LE1) zugeordneten Teilnehmeranschluß (TA1,3,4,6) weitervermittelt wird.

20. Verfahren nach einem der vorherigen Ansprüche,
**dadurch gekennzeichnet,**
**daß** an die Teilnehmeranschlüsse jeweils zumindest eine Kommunikationsendeinrichtung (KE1...6) angeschlossen ist.

21. Verfahren nach einem der vorherigen Ansprüche,
**dadurch gekennzeichnet,**
**daß** die Teilnehmeranschlüsse (TA1...6)
- als analoger Teilnehmeranschluß und/oder
- als ISDN-Basisanschluß und/oder
- als ISDN-Primärmultiplexanschluß und/oder
- als ein xDSL-Übertragungsverfahren realisierender Teilnehmeranschluß und/oder,
- als schnurloser Teilnehmeranschluß zum Anschluß einer schnurlosen Kommunikationsendeinrichtung, und/oder
- als mobilfunkkonformer Teilnehmeranschluß zum Anschluß eines mobilen, drahtlosen Kommunikationsendgerätes
ausgestaltet sind.

22. Verfahren nach einem der vorherigen Ansprüche,
**dadurch gekennzeichnet,**
- **daß** der zumindest einen Gruppe (NWHG) Funktionen und Leistungsmerkmale eines Call Center zugeordnet sind, wobei an zumindest einem Teil der Teilnehmeranschlüsse (TA1...6) Bedienplätze für Operatoren oder Agenten eines Call Centers angeschlossen sind, welche der Gruppe (NWHG) zugeordnet sind, und
- **daß** die Funktionen und Leistungsmerkmale des Call Center durch die die Gruppe (NWHG) steuernde Vermittlungseinrichtung (LE1) gesteuert werden.

23. Kommunikationsanordnung zur Realisierung von zusätzlichen Funktionen für jeweils konfigurierte Teilnehmerleistungsmerkmale aufweisende Teilnehmeranschlüsse (TA1...6), die untereinander verbundenen Vermittlungseinrichtungen (LE1...3) physikalisch zugeordnet sind,
bei der zumindest zwei Vermittlungseinrichtungen (LE1....3) Zuordnungsmittel zur Zuordnung zumindest eines Teils der Teilnehmeranschlüsse (TA1...6) zu zumindest einer Gruppe (NWHG) aufweisen,
**dadurch gekennzeichnet,**
- **daß** eine der Vermittlungseinrichtungen (LE1) Steuermittel zur Steuerung von der Gruppe (NWHG) zuordenbaren gruppenindividuellen Leistungsmerkmalen und/oder gruppenindividuellen Eigenschaften aufweist,
- **daß** die Zuordnungsmittel derart ausgestaltet sind, daß in der die Gruppe (NWHG) steuernden Vermittlungseinrichtung die nicht der steuernden Vermittlungseinrichtung physikalisch zugeordneten Teilnehmeranschlüsse (TA1,3,4,6) der Gruppe (NWHG) als virtuelle Teilnehmeranschlüsse zugeordnet werden,
- **daß** die Zuordnungsmittel zusätzlich derart ausgestaltet sind, daß Kommunikationsbeziehungen von und zu den Teilnehmeranschlüssen (TA1,3,4,6) die physikalisch nicht der die Gruppe (NWHG) steuernden Vermittlungseinrichtung (LE1) zugeordnet sind, im vermittlungstechnischem Sinne über die die Gruppe (NWHG) steuernde Vermittlungseinrichtung (LE1) vermittelt werden,
- **daß** die Steuermittel derart ausgestaltet sind,
-- **daß** in Abhängigkeit von den über die steuernde Vermittlungseinrichtung (LE1) vermittelten Kommunikationsbeziehungen entsprechende, den aktuellen vermittlungstechnischen und/oder betriebstechnischen Zustand der virtuellen Teilnehmeranschlüsse (TA1,3,4,6) repräsentierende Zustandsinformationen abgeleitet und in der die Gruppe steuernden Vermittlungseinrichtung (LE1) gespeichert werden, und
-- **daß** die den virtuellen Teilnehmeranschlüssen (TA1,3,4,6) zugeordneten gruppenindividuellen Leistungsmerkmale und/oder Eigenschaften in Abhängigkeit von den jeweils aktuell gespeicherten Zustands-Informationen gesteuert werden.

24. Kommunikationsanordnung zur Realisierung von zusätzlichen Funktionen für jeweils konfigurierte Teilnehmerleistungsmerkmale aufweisende Teilnehmeranschlüsse (TA1...6), die untereinander verbundenen Vermittlungseinrichtungen (LE1...3) physikalisch zugeordnet sind,
bei der zumindest zwei Vermittlungseinrichtungen (LE1...3) Zuordnungsmittel zur Zuordnung zumindest eines Teils der Teilnehmeranschlüsse (TA1...6) zu zumindest einer Gruppe (NWHG) aufweisen,
**dadurch gekennzeichnet,**
- **daß** eine der Vermittlungseinrichtungen (LE1) Steuermittel zur Steuerung von der Gruppe (NWHG) zuordenbaren gruppenindividuellen Leistungsmerkmalen und/oder gruppenindividuellen Eigenschaften aufweist,
- **daß** die Zuordnungsmittel derart ausgestaltet sind, daß in der die Gruppe (NWHG) steuernden Vermittlungseinrichtung die nicht der steuernden Vermittlungseinrichtung physikalisch zugeordneten Teilnehmeranschlüsse (TA1,3,4,6) der Gruppe (NWHG) als virtuelle Teilnehmeranschlüsse zugeordnet werden,
- **daß** die Zuordnungsmittel zusätzlich derart ausgestaltet sind,
-- die aktuellen vermittlungstechnischen und/oder betriebstechnischen Zustände der physikalisch nicht der die Gruppe (NWHG) steuernden Vermittlungseinrichtung (LE1) zugeordneten Teilnehmeranschlüsse (TA1,3,4,6) an die die Gruppe (NWHG) steuernde Vermittlungseinrichtung (LE1) übermittelt werden, oder
-- jede Änderung des vermittlungstechnischen und/oder betriebstechnischen Zustands der physikalisch nicht der die Gruppe (NWHG) steuernden Vermittlungseinrichtung (LE1) zugeordneten Teilnehmeranschlüsse (TA1,3,4,6) an die die Gruppe (NWHG) steuernde Vermittlungseinrichtung (LE1) übermittelt wird,
- **daß** die Steuermittel derart ausgestaltet sind,
-- **daß** in Abhängigkeit von den übermittelten Informationen entsprechende, den aktuellen vermittlungstechnische und/oder betriebstechnischen Zustand der virtuellen Teilnehmeranschlüsse (TA1,3,4,6) repräsentierende Zustands-Informationen abgeleitet und gespeichert werden, und
-- **daß** die den virtuellen Teilnehmeranschlüssen (TA1,3,4,6) zugeordneten gruppenindividuellen Leistungsmerkmale und/oder Eigenschaften in Abhängigkeit von den jeweils aktuell gespeicherten Zustandsinformationen gesteuert werden.

25. Kommunikationsanordnung nach Anspruch 23 oder 24,
**dadurch gekennzeichnet,**
**daß** die Vermittlungseinrichtungen (LE1...3) integraler Bestandteil eines übergeordneten Kommunikationsnetzes (KN) sind.

26. Kommunikationsanordnung nach einem der Ansprüche 23 bis 25,
**dadurch gekennzeichnet,**
**daß** die Teilnehmeranschlüsse (TA1...6)
- als analoger Teilnehmeranschluß und/oder
- als ISDN-Basisanschluß und/oder
- als ISDN-Primärmultiplexanschluß und/oder
- als ein xDSL-Übertragungsverfahren realisierender Teilnehmeranschluß und/oder,
- als schnurloser Teilnehmeranschluß zum Anschluß einer schnurlosen Kommunikationsendeinrichtung, und/oder
- als mobilfunkkonformer Teilnehmeranschluß zum Anschluß eines mobilen, drahtlosen Kommunikationsendgerätes
ausgestaltet sind.

27. Kommunikationsanordnung nach einem der Ansprüche 23 bis 26,
**dadurch gekennzeichnet,**
**daß** an zumindest einen Teil der Teilnehmeranschlüsse (TA1...6) Bedienplätze für Operatoren oder Agenten eines Call Centers angeschlossen sind, welche der Gruppe (NWHG) zugeordnet sind, wobei der zumindest einen Gruppe (NWHG) Funktionen und Leistungsmerkmale eines Call Center zugeordnet sind, und wobei die die Funktionen und Leistungsmerkmale des Call Center durch die die Gruppe (NWHG) steuernde Vermittlungseinrichtung (LE1) gesteuert werden.

## Claims

1. Method of implementing additional functions for subscriber lines (TA1...6) which have respectively configured subscriber service features and are physically assigned to interconnected switching devices (LE1...3), in which
- at least some of the subscriber lines (TA1...6) of at least two switching devices (LE1...3) are assigned to at least one group (NWHG),
- the at least one group (NWHG) can be assigned group-individual service features and/or group-individual characteristics, **characterized**
- **in that** the service features and/or characteristics assigned to the group (NWHG) are controlled by one of the switching devices (LE1),
- **in that**, in the switching device (LE1) controlling the group (NWHG), the subscriber lines (TA1,3,4,6) of the group (NWHG) not physically assigned to this switching device (LE1) are assigned as virtual subscriber lines,
- **in that** the switching devices (LE1...3) are administered in such a way that communication relationships from and to the subscriber lines (TA1,3,4,6) which are not physically assigned to the switching device (LE1) controlling the group (NWHG) are switched in the telecommunication sense by means of the switching device (LE1) controlling the group (NWHG),
- **in that**, in the switching device (LE1) controlling the group (NWHG), in dependence on the communication relationships switched via the controlling switching device (LE1), corresponding items of state information representing the current switching and/or operational state of the virtual subscriber lines (TA1,3,4,6) are derived and stored in the switching device (LE1) controlling the group,
- **in that** the group-individual service features and/or characteristics assigned to the virtual subscriber lines (TA1,3,4,6) are controlled in dependence on the respectively currently stored state information.

2. Method according to Claim 1, **characterized in that** the switching devices (LE1...3) are an integral part of a higher-level communication network (KN), communication relationships from and to the subscriber lines (TA1,3,4,6) which are not physically assigned to the switching device (LE1) controlling the group (NWHG) being switched in the telecommunication sense by means of the switching device (LE1) controlling the group (NWHG).

3. Method of implementing additional functions for subscriber lines (TA1...6) which have respectively configured subscriber service features and are physically assigned to interconnected switching devices (LE1...3), in which
- at least some of the subscriber lines (TA1...6) of at least two switching devices (LE1...3) are assigned to at least one group (NWHG),
- the at least one group (NWHG) can be assigned group-individual service features and/or group-individual characteristics, **characterized**
- **in that** the service features and/or characteristics assigned to the group (NWHG) are controlled by one of the switching devices (LE1), and
- **in that**, in the switching device (LE1) controlling the group (NWHG), the subscriber lines (TA1,3,4,6) of the group (NWHG) not physically assigned to this switching device (LE1) are assigned as virtual subscriber lines,
- **in that** the switching devices (LE1...3) are administered in such a way that
-- the current switching and/or operational states of the subscriber lines (TA1,3,4,6) not physically assigned to the switching device (LE1) controlling the group (NWHG) are transmitted to the switching device (LE1) controlling the group (NWHG), or
-- each change of the switching and/or operational state of the subscriber lines (TA1,3,4,6) not physically assigned to the switching device (LE1) controlling the group (NWHG) is transmitted to the switching device (LE1) controlling the group (NWHG),
- **in that**, in the switching device (LE1) controlling the group (NWHG), in dependence on the information transmitted, corresponding items of state information representing the current switching and/or operational state of the virtual subscriber lines (TA1,3,4,6) are derived and stored, and
- **in that** the group-individual service features and/or characteristics assigned to the virtual subscriber lines (TA1, 3, 4, 6) are controlled in dependence on the respectively currently stored state information.

4. Method according to Claim 3, **characterized in that** items of state information (b/i) representing the respectively current switching and operational state or the change of the switching and operational state of the subscriber lines (TA1,3,4,6) not physically assigned to the switching device (LE1) controlling the group (NWHG) are transmitted with the aid of the Transaction Capabilities Application Part protocol (TCAP) on the basis of the signaling protocol No. 7.

5. Method according to Claim 4, **characterized in that** the items of state information (b/i) are transmitted by means of messages controlling the functions of an Intelligent Network.

6. Method according to one of the preceding claims, **characterized in that** the at least one group (NWHG) is assigned at least one group-individual group call number (PDN).

7. Method according to Claim 6, **characterized in that**, in the case of a communication relationship to be switched to the at least one group-individual group call number (PDN), the at least one group (NWHG) is assigned a group-individual search procedure or a hunting algorithm for finding a free subscriber line within the group (NWHG).

8. Method according to one of the preceding claims,
**characterized**
**in that** an organization unit (OGRP) representing the at least one group (NWHG) is provided in a database (DB) of the switching device (LE1) controlling the group (NWHG), with
- line information (DN1...6, DN1p, DN3p, DN4p, DN6p, DN1f, DN3f, DN4f, DN6f) representing subscriber lines (TA1...6) assigned to the group (NWHG), and
- information (PDN, HUNT) representing group-individual service features and/or characteristics assigned to the group (NWHG)
being stored in the organization unit (OGRP).

9. Method according to Claim 7 or 8, **characterized in that** the group (NWHG) is assigned at least one group-individual waiting queue; in the event that no free subscriber line (TA1...6) is found within the search procedure, the communication relationship to be switched is made to wait in turn in the at least one waiting queue and, after finding a free subscriber line (TA1...6), the communication relationship is taken from the waiting queue and forwarded to the free subscriber line (TA1...6).

10. Method according to Claim 9, **characterized in that** the organization unit (OGRP) is assigned in the database (DB) of the switching device (LE1) controlling the group (NWHG) a memory area representing the at least one waiting queue and realizing at least one waiting position.

11. Method according to one of Claims 7 to 10, **characterized in that** a subscriber line (TA1...6) provides at least one user data channel which can be switched within the search procedure for the transmission of information.

12. Method according to Claim 11, **characterized in that** the number of user data channels which can be switched within the search procedure for the subscriber line (TA1...6) in the case of a subscriber line (TA1...6) having a number of user data channels is predeterminable.

13. Method according to one of Claims 7 to 12, **characterized**
- **in that** the subscriber line (TA1...6) is assigned at least one subscriber call number (DN1...6),
- **in that** the number of user data channels which can be used simultaneously under a subscriber call number (DN1...6) within the search procedure is predeterminable.

14. Method according to one of the preceding claims, **characterized in that** the virtual subscriber lines are respectively assigned at least one item of addressing information (DN1,3,4,6, DN1n,3n,4n,5n, DN1f,3f,4f,6f), with the aid of which communication relationships are set up between the switching device (LE1) controlling the group (NWHG) and the subscriber lines (TA1,3,4,6) which are not physically assigned to the controlling switching device (LE1).

15. Method according to one of the preceding claims, **characterized in that** the switching devices (LE1...3) are interconnected via at least one inter-exchange line (TR1...3).

16. Method according to one of the preceding claims, **characterized in that** the switching devices (LE1...3) are administered in such a way that a communication relationship to be switched from a subscriber line (TA1,3,4,6) not physically assigned to the controlling switching device (LE1) to a destination determined by destination information (B-DN) is switched with the aid of an item of routing information (PREFIX) added to the destination information firstly to the controlling switching device (LE1) and from the latter to the destination.

17. Method according to one of Claims 14 to 16, **characterized in that** a communication relationship to be switched to a subscriber line (TA1,3,4,6) not physically assigned to the controlling switching device (LE1) is forwarded to the switching device (LE1) controlling the group (NWHG) and subsequently forwarded with the aid of the addressing information (DN1,3,4,6, DN1n,3n,4n,5n, DN1f,3f,4f,6f) assigned to the respective virtual subscriber line to the subscriber line (TA1,3,4,6) not physically assigned to the controlling switching device (LE1).

18. Method according to one of Claims 14 to 16, **characterized**
- **in that** the subscriber lines (TA1,3,4,6) not physically assigned to the controlling switching device (LE1) are identified as ported within the switching service feature "Number Portability",
- **in that** a communication relationship to be switched to a subscriber line (TA1,3,4,6) not physically assigned to the controlling switching device (LE1) is firstly switched within the switching service feature "Number Portability" to the corresponding switching device (LE2,3), to which the subscriber lines (TA1,3,4,6) are physically assigned, and subsequently switched by means of the switching service feature "Number Portability" to the switching device (LE1) controlling the group and subsequently forwarded with the aid of the addressing information (DN1,3,4,6, DN1n,3n,4n,5n, DN1f,3f,4f,6f) assigned to the respective virtual subscriber line to the corresponding subscriber line (TA1,3,4,6) not physically assigned to the controlling switching device (LE1).

19. Method according to one of Claims 14 to 16, **characterized in that** a communication relationship to be switched to a subscriber line (TA1,3,4,6) not physically assigned to the controlling switching device (LE1) is firstly switched to the corresponding switching device (LE2,3), to which the subscriber lines (TA1,3,4,6) are physically assigned, and subsequently diverted within the switching service feature "Call Diversion" to the switching device (LE1) controlling the group, and subsequently forwarded with the aid of the addressing information (DN1,3,4,6, DN1n,3n,4n,5n, DN1f,3f,4f,6f) assigned to the respective virtual subscriber line to the corresponding subscriber line (TA1,3,4,6) not physically assigned to the controlling switching device (LE1).

20. Method according to one of the preceding claims, **characterized in that** at least one communication terminal (KE1...6) is respectively connected to the subscriber lines.

21. Method according to one of the preceding claims, **characterized in that** the subscriber lines (TA1...6) are configured
- as an analog subscriber line and/or
- as an ISDN basic access and/or
- as an ISDN primary rate access and/or
- as a subscriber line implementing an xDSL transmission method and/or,
- as a cordless subscriber line for the connection of a cordless communication terminal, and/or
- as a mobile-radio-conformal subscriber line for the connection of a mobile, wireless communication terminal.

22. Method according to one of the preceding claims, **characterized**
- **in that** the at least one group (NWHG) is assigned functions and service features of a call center, stations for switchboard operators or agents of a call center which are assigned to the group (NWHG) being connected to at least some of the subscriber lines (TA1...6), and
- **in that** the functions and service features of the call center are controlled by the switching device (LE1) controlling the group (NWHG).

23. Communication arrangement for implementing additional functions for subscriber lines (TA1...6) which have respectively configured subscriber service features and are physically assigned to interconnected switching devices (LE1...3),
in which at least two switching devices (LE1...3) have assignment means for assigning at least some of the subscriber lines (TA1...6) to at least one group (NWHG),
**characterized**
- **in that** one of the switching devices (LE1) has control means for controlling group-individual service features and/or group-individual characteristics which can be assigned to the group (NWHG),
- **in that** the assignment means are configured in such a way that, in the switching device controlling the group (NWHG), the subscriber lines (TA1,3,4,6) not physically assigned to the controlling switching device are assigned to the group (NWHG) as virtual subscriber lines,
- **in that** the assignment means are additionally configured in such a way that communication relationships from and to the subscriber lines (TA1,3,4,6) which are not physically assigned to the switching device (LE1) controlling the group (NWHG) are switched in the telecommunication sense by means of the switching device (LE1) controlling the group (NWHG),
- **in that** the control means are configured in such a way
-- that, in dependence on the communication relationships switched via the controlling switching device (LE1), corresponding items of state information representing the current switching and/or operational state of the virtual subscriber lines (TA1,3,4,6) are derived and stored in the switching device (LE1) controlling the group, and
-- that the group-individual service features and/or characteristics assigned to the virtual subscriber lines (TA1,3,4,6) are controlled in dependence on the respectively currently stored state information.

24. Communication arrangement for implementing additional functions for subscriber lines (TA1...6) which have respectively configured subscriber service features and are physically assigned to interconnected switching devices (LE1...3),
in which at least two switching devices (LE1...3) have assignment means for assigning at least some of the subscriber lines (TA1...6) to at least one group (NWHG),
**characterized**
- **in that** one of the switching devices (LE1) has control means for controlling group-individual service features and/or group-individual characteristics which can be assigned to the group (NWHG),
- **in that** the assignment means are configured in such a way that, in the switching device controlling the group (NWHG), the subscriber lines (TA1,3,4,6) not physically assigned to the controlling switching device are assigned to the group (NWHG) as virtual subscriber lines,
- **in that** the assignment means are additionally configured in such a way
-- the current switching and/or operational states of the subscriber lines (TA1,3,4,6) not physically assigned to the switching device (LE1) controlling the group (NWHG) are transmitted to the switching device (LE1) controlling the group (NWHG), or
-- each change of the switching and/or operational state of the subscriber lines (TA1,3,4,6) not physically assigned to the switching device (LE1) controlling the group (NWHG) is transmitted to the switching device (LE1) controlling the group (NWHG),
- **in that** the control means are configured in such a way
-- that, in dependence on the information transmitted, corresponding items of state information representing the current switching and/or operational state of the virtual subscriber lines (TA1,3,4,6) are derived and stored, and
-- that the group-individual service features and/or characteristics assigned to the virtual subscriber lines (TA1,3,4,6) are controlled in dependence on the respectively currently stored state information.

25. Communication arrangement according to Claim 23 or 24, **characterized in that** the switching devices (LE1...3) are an integral part of a higher-level communication network (KN).

26. Communication arrangement according to one of Claims 23 to 25, **characterized in that** the subscriber lines (TA1...6) are configured
- as an analog subscriber line and/or
- as an ISDN basic access and/or
- as an ISDN primary rate access and/or
- as a subscriber line implementing an xDSL transmission method and/or
- as a cordless subscriber line for the connection of a cordless communication terminal, and/or
- as a mobile-radio-conformal subscriber line for the connection of a mobile, wireless communication terminal.

27. Communication arrangement according to one of Claims 23 to 26, **characterized in that** stations for switchboard operators or agents of a call center which are assigned to the group (NWHG) are connected to at least some of the subscriber lines (TA1...6), the at least one group (NWHG) being assigned functions and service features of a call center, and the the functions and service features of the call center being controlled by the switching device (LE1) controlling the group (NWHG).

## Revendications

1. Procédé pour la réalisation de fonctions supplémentaires pour des raccordements d'abonnés (TA1...6), présentant des services offerts d'abonnés respectivement configurés, qui sont attribués physiquement à des centraux commutateurs (LE1...3) reliés entre eux, dans lequel
- au moins une partie des raccordements d'abonnés (TA1...6) d'au moins deux centraux commutateurs (LE1...3) sont attribués à au moins un groupe (NWHG),
- des services offerts spécifiques au groupe et/ou des propriétés spécifiques aux groupes peuvent être attribués à au moins un groupe (NWHG),
**caractérisé en ce que**
- les services offerts et/ou propriétés attribuées au groupe (NWHG) sont commandés par l'un des centraux commutateurs (LE1), et
- **en ce que**, dans le central commutateur (LE1) commandant le groupe (NWHG), les raccordements d'abonnés (TA1, 3, 4, 6) non attribués physiquement à ce central commutateur (LE1), sont attribués au groupe (NWHG) en tant que raccordements d'abonnés virtuels,
- **en ce que** les centraux commutateurs (LE1) sont administrés de telle sorte que des liaisons de communication au départ et à l'arrivée des raccordements d'abonnés (TA1, 3, 4, 6), qui ne sont pas attribués physiquement au central commutateur (LE1) commandant le groupe (NWHG), sont transmises dans le sens d'une commutation par le central commutateur (LE1) commandant le groupe (NWHG),
- **en ce que**, dans le central commutateur (LE1) commandant le groupe (NWHG), des informations d'états appropriés, représentant l'état actuel de commutation et/ou d'exploitation des raccordements d'abonnés (TA1, 3, 4, 6) virtuels sont déduites en fonction de liaisons de communication transmises par le central commutateur (LE1) de commande et sont stockées dans le central commutateur (LE1) commandant le groupe,
- **en ce que** les services offerts et/ou propriétés spécifiques au groupe, attribués aux raccordements d'abonnés (TA1, 3, 4, 6) virtuels sont commandés en fonction des informations d'état stockées respectivement actuellement.

2. Procédé selon la revendication 1,
**caractérisé en ce que**
les centres commutateurs (LE1...3) font partie intégrante d'un réseau de communication (KN) prioritaire, des liaisons de communication au départ et à l'arrivée des raccordements d'abonnés (TA1, 3, 4, 6), qui ne sont pas attribués physiquement au central commutateur (LE1) commandant le groupe (NWHG), étant transmis dans le sens de la commutation par le central commutateur (LE1) commandant le groupe (NWHG).

3. Procédé pour la réalisation de fonctions supplémentaires pour des raccordements d'abonnés (TA1...6) présentant des services offerts d'abonné respectivement configurés, qui sont attribués physiquement à des centraux commutateurs (LE1..3) reliés entre eux, dans lequel
- au moins une partie des raccordements d'abonnés (TA1...6) d'au moins deux centraux de commutateur (LE1...3) sont attribués à au moins un groupe (NWHG),
- des services offerts spécifiques au groupe et/ou des propriétés spécifiques au groupe peuvent être attribués à au moins un groupe (NWHG),
**caractérisé en ce que**
- les services offerts et/ou propriétés attribués au groupe (NWHG) sont commandées par l'un des centraux commutateurs (LE1), et
- **en ce que**, dans le central commutateur (LE1) commandant le groupe (NWHG), les raccordements d'abonnés (TA1, 3, 4, 6) non attribués physiquement à ce central commutateur (LE1...3) sont attribués au groupe (NWHG) en tant que raccordements d'abonnés virtuels,
- **en ce que** les centraux commutateurs (LE1...3) sont administrés de telle sorte que
-- les états de commutation et/ou d'exploitation actuels des raccordements d'abonnés (TA1, 3, 4, 6) non attribués physiquement au central commutateur (LE1) commandant le groupe (NWHG) sont transmis au central commutateur (LE1) commandant le groupe (NWHG), ou
-- toute modification de l'état de commutation et/ou d'exploitation des raccordements d'abonnés (TA1, 3, 4, 6) non attribués physiquement au central commutateur (LE1) commandant le groupe (NWHG) est transmise au central commutateur (LE1) commandant le groupe (NWHG),
- **en ce que**, dans le central commutateur (LE1) commandant le groupe (NWHG), des informations d'état appropriées, représentant l'état de commutation et/ou d'exploitation actuel des raccordements d'abonnés (TA1, 3, 4, 6) virtuels sont déduites en fonction des informations transmises et sont stockées, et
- **en ce que** les offres de service et/ou propriétés spécifiques au groupe, attribués aux raccordements d'abonnés (TA1, 3, 4, 6) virtuels, sont commandées en fonction des informations d'état stockées à chaque fois de façon actuelle.

4. Procédé selon la revendication 3,
**caractérisé en ce que**
des informations d'état (b/i) représentant l'état de commutation et d'exploitation respectivement actuel ou la modification de l'état de commutation et d'exploitation des raccordements d'abonnés (TA1, 3, 4, 6) non attribués physiquement au central de commutateur (LE1) commandant le groupe (NWHG) sont transmises à l'aide du Transaction-Capabilities-Application-Part-Protocol (TCAP) sur la base de la procédure de signalisation n° 7.

5. Procédé selon la revendication 4,
**caractérisé en ce que**
les informations d'état (b/i) sont transmises au moyen de messages commandant les fonctions d'un réseau intelligent.

6. Procédé selon l'une quelconque des revendications précédentes,
**caractérisé en ce que**
au moins un numéro d'appel de groupe (PDN) spécifique au groupe est attribué à au moins un groupe (NWHG).

7. Procédé selon la revendication 6,
**caractérisé en ce que,**
dans le cas d'une liaison de communication à transmettre à au moins un numéro d'appel de groupe (PDN) spécifique au groupe, une procédure de recherche spécifique au groupe, respectivement un algorithme de "hunting" destiné à déterminer un raccordement d'abonné libre à l'intérieur du groupe (NWHG) est attribué(e) à au moins un groupe (NWHG).

8. Procédé selon l'une quelconque des revendications précédentes,
**caractérisé en ce que**
une unité d'organisation (OGRP) représentant le au moins un groupe (NWHG) est prévue dans une base de données (DB) du central commutateur (LE1) commandant le groupe (NWHG),
- des informations de raccordement (DN1...6, DN1p, DN3p, DN4p, DN6p, DN1f, DN3f, DN4f, DN6f) représentant les raccordements d'abonnés (TA1...6) attribués au groupe (NWHG) et
- des informations (PDN, HUNT) représentant les services offerts et/ou propriétés spécifiques au groupe et attribuées au groupe (NWHG)
étant stockées dans l'unité d'organisation (OGRP).

9. Procédé selon la revendication 7 ou 8,
**caractérisé en ce que**
au moins une file d'attente spécifique au groupe est attribuée au groupe (NWHG), sachant que, dans le cas où aucun raccordement d'abonné libre (TA1...6) n'est trouvé dans le cadre de la procédure de recherche, la liaison de communication à transmettre est rangée dans la au moins une file d'attente et, après la constatation d'un raccordement d'abonné (TA1...6) libre, la liaison de communication est sortie de la file d'attente et retransmise au raccordement d'abonné (TA1...6) libre.

10. Procédé selon la revendication 9,
**caractérisé en ce que**
une zone de mémoire représentant au moins une file d'attente et réalisant au moins une position d'attente est attribuée à l'unité d'organisation (OGRP) dans la base de données (DB) du central commutateur (LE1) commandant le groupe (NWHG).

11. Procédé selon l'une quelconque des revendications 7 à 10,
**caractérisé en ce que**
au moins un canal de données utiles pouvant être transmis dans le cadre de la procédure de recherche pour une transmission d'information est mis à disposition par un raccordement d'abonné (TA1...6).

12. Procédé selon la revendication 11,
**caractérisé en ce que,**
lors d'un raccordement d'abonné (TA1...6) présentant plusieurs canaux de données utiles, le nombre des canaux de données utiles pouvant être transmis dans le cadre de la procédure de recherche pour le raccordement d'abonné (TA1...6) peut être prédéfini.

13. Procédé selon l'une quelconque des revendications 7 à 12,
**caractérisé en ce que**
- au moins un numéro d'appel d'abonné (DN1...6) est attribué au raccordement d'abonné (TA1...6),
- le nombre des canaux de données utiles utilisés simultanément sous un numéro d'appel d'abonné (DN1...6) peut être prédéfini dans le cadre de la procédure de recherche.

14. Procédé selon l'une quelconque des revendications précédentes,
**caractérisé en ce que**
à chaque fois au moins une information d'adressage (DN1, 3, 4, 6, DN1n, 3n, 4n, 5n, DN1f, 3f, 4f, 6f) est attribuée aux raccordements d'abonnés virtuels, information à l'aide de laquelle des liaisons de communication sont mises en place entre le central commutateur (LE1) commandant le groupe (NWHG) et les raccordements d'abonnés (TA1, 3, 4, 6), qui ne sont pas attribués physiquement au central commutateur (LE1) de commande.

15. Procédé selon l'une quelconque des revendications précédentes,
**caractérisé en ce que**
les centraux commutateurs (LE1...3) sont reliés entre eux par au moins une ligne de centre intermédiaire (TR1...3).

16. Procédé selon l'une quelconque des revendications précédentes,
**caractérisé en ce que**
les centraux commutateurs (LE1...3) sont administrés de telle sorte qu'une liaison de communication, qui peut être transmise par un raccordement d'abonné (TA1, 3, 4, 6) non attribué physiquement au central commutateur (LE1) de commande à un objectif défini par des informations cible (B-DN), est transmise à l'aide d'une information de routage (PREFIX) ajoutée aux informations cible d'abord au central commutateur (LE1) de commande et de celui-ci à la cible.

17. Procédé selon l'une quelconque des revendications 14 à 16,
**caractérisé en ce que**
une liaison de communication à transmettre à un raccordement d'abonné (TA1, 3, 4, 6) non attribué physiquement au central commutateur (LE1) de commande est retransmise au central commutateur (LE1) commandant le groupe (NWHG) et ensuite à l'aide des informations d'adressage (DN1, 4, 6, DN1n, 3n, 4n, 5n, DN1f, 3f, 4f, 6f) attribuées au raccordement d'abonné virtuel concerné, au raccordement d'abonné (TA1, 3, 4, 6) non attribué physiquement au central commutateur (LE1) de commande.

18. Procédé selon l'une quelconque des revendications 14 à 16,
**caractérisé en ce que**
- les raccordements d'abonnés (TA1, 3, 4, 6) non attribués physiquement au central commutateur de commande (LE1) sont qualifiés de portés dans le cadre du service offert de commutation "Number Portability",
- **en ce qu'**une liaison de communication à transmettre à un raccordement d'abonné (TA1, 3, 4, 6) non attribué physiquement au central commutateur (LE1) de commande est transmise dans le cadre du service offert de commutation "Number Portability" d'abord au central commutateur (LE2, 3) correspondant, auquel les raccordements d'abonnés (TA1, 3, 4, 6) sont attribués physiquement, est transmise ensuite au moyen du service offert de commutation "Number Portability" au central commutateur (LE1) commandant le groupe et retransmise ensuite à l'aide des informations d'adressage (DN1, 3, 4, 6, DN1n, 3n, 4n, 5n, DN1f, 3f, 4f, 6f) attribuées au raccordement d'abonné virtuel respectif au raccordement d'abonné (TA1, 3, 4, 6) correspondant, non attribué physiquement au central commutateur (LE1) de commande.

19. Procédé selon l'une quelconque des revendications 14 à 16,
**caractérisé en ce que**
une liaison de communication à transmettre à un raccordement d'abonné (TA1, 3, 4, 6) non attribué physiquement au central commutateur (LE1) de commande est transmise d'abord au central commutateur (LE2, 3) correspondant, auquel les raccordements d'abonnés (TA1, 4, 6) sont attribués physiquement, et déviée ensuite dans le cadre du service offert de commutation "transfert d'appel" sur le central commutateur (LE1) commandant le groupe et retransmis ensuite à l'aide des informations d'adressage (DN1, 3, 4, 6, DN1n, 3n, 4n, 5n, DN1f, 3f, 4f, 6f) attribuées au raccordement d'abonné virtuel respectif, au raccordement d'abonné (TA1, 3, 4, 6) correspondant, non attribué physiquement au central commutateur (LE1) de commande.

20. Procédé selon l'une quelconque des revendications précédentes,
**caractérisé en ce que**
à chaque fois au moins un équipement terminal de communication (KE1... 6) est raccordé aux raccordements d'abonnés.

21. Procédé selon l'une quelconque des revendications précédentes,
**caractérisé en ce que**
les raccordements d'abonnés (TA1... 6) sont conçus
- comme raccordement d'abonné analogique et/ou
- comme raccordement de base ISDN et/ou
- comme raccordement multiplex primaire ISDN et/ou
- comme un raccordement d'abonné réalisant une procédure de transmission xDSL et/ou
- comme raccordement d'abonné sans fil pour le raccordement d'un équipement terminal de communication sans fil et/ou
- comme raccordement d'abonné conforme à la téléphonie mobile pour le raccordement d'un terminal de communication mobile et sans fil.

22. Procédé selon l'une quelconque des revendications précédentes,
**caractérisé en ce que**
- des fonctions et des services offerts d'un "call center" sont attribués au moins à un groupe (NWHG), des postes de commande pour des opérateurs ou des agents d'un "call center", qui sont attribués au groupe (NWHG), étant raccordés à au moins une partie des raccordements d'abonnés (TA1... 6), et
- **en ce que** les fonctions et services offerts du "call center" sont commandés par le central commutateur (LE1) commandant le groupe (NWHG).

23. Dispositif de communication pour la réalisation de fonctions supplémentaires pour des raccordements d'abonnés (TA1... 6) présentant des services offerts d'abonnés respectivement configurés, qui sont attribués physiquement à des centraux commutateurs (LE1... 3) reliés entre eux, sur lequel au moins deux centraux commutateurs (LE1... 3) présentent des moyens d'attribution pour l'attribution d'au moins une partie des raccordements d'abonnés (TA1... 6) à au moins un groupe (NWHG),
**caractérisé en ce que**
- l'un des centraux commutateurs (LE1) présente des moyens de commande pour la commande de services offerts individuels, spécifiques au groupe et pouvant être attribués au groupe (NWHG) et/ou des propriétés spécifiques au groupe,
- **en ce que** les moyens d'attribution sont conçus de telle sorte que, dans le central commutateur commandant le groupe (NWHG), les raccordements d'abonnés (TA1, 3, 4, 6) non attribués physiquement au central commutateur de commande sont attribués au groupe (NWHG) en tant que raccordements d'abonnés virtuels,
- **en ce que** les moyens d'attribution sont conçus en supplément de telle sorte que des liaisons de communication au départ et à l'arrivée des raccordements d'abonnés (TA1, 3, 4, 6), qui ne sont pas attribués physiquement au central commutateur (LE1) commandant le groupe (NWHG), sont transmis dans le sens d'une commutation par le central commutateur (LE1) commandant le groupe (NWHG),
- **en ce que** les moyens de commande sont conçus de telle sorte que
-- des informations d'état correspondantes, représentant l'état actuel de commutation et/ou d'exploitation des raccordements d'abonnés (TA1, 3, 4, 6) virtuels, sont déduites en fonction des liaisons de communication transmises par le central commutateur (LE1) de commande et sont stockées dans le central commutateur (LE1) commandant le groupe, et
-- **en ce que** les services offerts et/ou propriétés spécifiques au groupe et attribués aux raccordements d'abonnés (TA1, 3, 4, 6) virtuels sont commandés en fonction des informations d'état respectives stockées actuellement.

24. Agencement de communication pour la réalisation de fonctions supplémentaires pour des raccordements d'abonnés (TA1... 6) présentant des services offerts d'abonnés respectivement configurés, qui sont attribués physiquement à des centraux commutateurs (LE1... 3) reliés entre eux,
sur lequel au moins deux centraux commutateurs (LE1... 3) présentent des moyens d'attribution pour l'attribution d'au moins une partie des raccordements d'abonnés (TA1... 6) à au moins un groupe (NWHG),
**caractérisé en ce que**
- l'un des centraux commutateurs (LE1) présente des moyens de commande pour la commande de services offerts spécifiques au groupe et pouvant être attribués au groupe (NWHG) et/ou de propriétés spécifiques au groupe,
- **en ce que** les moyens d'attribution sont conçus de telle sorte que, dans le central commutateur commandant le groupe (NWHG), les raccordements d'abonnés (TA1, 3, 4, 6) non attribués physiquement au central commutateur de commande sont attribués au groupe (NWHG) en tant que raccordements d'abonnés virtuels,
- **en ce que** les moyens d'attribution sont conçus en supplément de telle sorte que,
-- les états actuels de commutation et/ou d'exploitation des raccordements d'abonnés (TA1, 3, 4, 6) non attribués physiquement au central commutateur (LE1) commandant le groupe (NWHG) sont transmis au central commutateur (LE1) commandant le groupe (NWHG), ou
-- toute modification de l'état de commutation et/ou d'exploitation des raccordements d'abonnés (TA1, 3, 4, 6) non attribués physiquement au central commutateur (LE1) commandant le groupe (NWHG) est transmise au central commutateur (LE1) commandant le groupe (NWHG),
- **en ce que** les éléments de commande sont conçus de telle sorte que,
-- des informations d'état correspondantes, représentant l'état actuel de commutation et/ou d'exploitation des raccordements d'abonnés (TA1, 3, 4, 6) virtuels sont déduites et stockées en fonction des informations transmises, et
-- **en ce que** les services offerts et/ou propriétés spécifiques au groupe, attribuées aux raccordements d'abonnés (TA1, 3, 4, 6) virtuels sont commandées en fonction des informations d'état respectives stockées actuellement.

25. Agencement de communication selon la revendication 23 ou 24,
**caractérisé en ce que**
les centraux commutateurs (LE1... 3) font partie intégrante d'un réseau de communication (KN) prioritaire.

26. Agencement de communication selon l'une quelconque des revendications 23 à 25,
**caractérisé en ce que**
les raccordements d'abonnés (TA1... 6) sont conçus
- comme raccordement d'abonné analogique et/ou
- comme raccordement de base ISDN et/ou
- comme raccordement multiplex primaire ISDN et/ou
- comme un raccordement d'abonné réalisant un procédé de transmission xDSL et/ou,
- comme raccordement d'abonné sans fil pour le raccordement d'un équipement terminal de communication sans fil, et/ou
- comme raccordement d'abonné conforme à la téléphonie mobile pour le raccordement d'un terminal de communication mobile et sans fil.

27. Agencement de communication selon l'une quelconque des revendications 23 à 26,
**caractérisé en ce que**
sur au moins une partie des raccordements d'abonnés (TA1... 6) se raccordent des postes de commande pour des opérateurs ou des agents d'un "call center", qui sont attribués au groupe (NWHG), des fonctions et des services offerts d'un "call center" étant attribués à au moins un groupe (NWHG), et les fonctions et services offerts du "call center" étant commandés par le central commutateur (LE1) commandant le groupe (NWHG).
